# EUROPEAN PATENT APPLICATION

(11) **EP 4 844 690 A1**
(43) Date of publication of application: **25.11.2026**
(21) Application number: 25896947.6
(22) Date of filing: 09.10.2025
(51) Int. Cl.: G06T 15/06, G06T 15/50

(54) **IMAGE RENDERING METHOD AND APPARATUS, AND DEVICE, STORAGE MEDIUM AND PROGRAM PRODUCT**

(30) Priority: 28.11.2024 CN 202411731795
(71) Applicant: Tencent Technology (Shenzhen) Company Limited, Shenzhen, Guangdong 518057 (CN)
(72) Inventor: GU, Dezhen, Shenzhen, Guangdong 518057 (CN)
(74) Representative: Nederlandsch Octrooibureau
(86) International application number: PCT/CN2025/126544
(87) International publication number: WO 2026/113651

(57) **Abstract**

Provided are an image rendering method and apparatus, and an electronic device, a computer-readable storage medium and a computer program product. The method comprises: on the basis of the position of a first virtual object in a virtual scene and a viewing angle of a virtual camera, performing parallax correction on a reflection probe provided in the virtual scene; by means of the reflection probe which has been subjected to parallax correction, collecting illumination information of reflected light of the first virtual object; acquiring a texture image of the first virtual object, and on the basis of the texture image and the illumination information, determining color values of image pixel points; and on the basis of the color values of the image pixel points, performing rendering to obtain a reflection image of the first virtual object.

## Description

### RELATED APPLICATION

The present application is filed based on Chinese Patent Application No. 2024117317953, filed on November 28, 2024, and claims priority to this Chinese patent application, the entire content of which is incorporated by reference herein.

### FIELD OF THE TECHNOLOGY

The invention relates to the field of Internet technology, and in particular, to an image rendering method and apparatus, and an electronic device, a computer-readable storage medium, and a computer program product.

### BACKGROUND

In a reflection probe-based reflection scheme in computer graphics, illumination information is collected by a reflection probe according to a reflection direction, and an error may occur in a collection position, thereby resulting in a relatively poor rendering effect of a reflected image. In an emitted ray-based reflection scheme, after an accurate hit point of a reflected light ray in world space is acquired by emitting rays, illumination information corresponding to the hit point of the reflected light ray is sampled from a world-space illumination storage structure. However, since the world-space illumination information storage incurs high performance overhead, the precision of the world-space illumination information storage itself is not high, thereby resulting in a relatively poor rendering effect of a reflected image. Meanwhile, in the reflection probe-based reflection scheme, in order to compensate for the error in the collection position, multiple groups of probes are required to be arranged in a scene. The storage and maintenance of a large quantity of probes would occupy excessive memory resources, resulting in redundant memory consumption. While in the emitted ray-based reflection scheme, the reliance on the high-performance-overhead world-space illumination storage structure and a need for additional correction computations to improve the effect increase a rendering computational load, thereby reducing the memory utilization, and also affecting the response efficiency of generation of the reflected image.

### SUMMARY

In view of this, embodiments of the invention provide an image rendering method and apparatus, and an electronic device, a computer-readable storage medium, and a computer program product, which can improve a rendering effect of a reflected image.

The embodiments of the invention provide the following technical solutions.

An embodiment of the invention provides an image rendering method executed by an electronic device. The method includes: performing, based on a position of a first virtual object in a virtual scene and a viewing angle of a virtual camera, parallax correction on a reflection probe disposed in the virtual scene; collecting, by the parallax-corrected reflection probe, illumination information of a reflected light ray of the first virtual object; acquiring a texture image of the first virtual object, and determining, based on the texture image and the illumination information, color values of image pixels; and rendering, based on the color values of the image pixels, so as to obtain a reflected image of the first virtual object.

An embodiment of the invention provides an image rendering apparatus, including: a correction module, configured to perform, based on a position of a first virtual object in a virtual scene and a viewing angle of a virtual camera, parallax correction on a reflection probe disposed in the virtual scene; a collection module, configured to collect, by the parallax-corrected reflection probe, illumination information of a reflected light ray of the first virtual object; a determination module, configured to acquire a texture image of the first virtual object, and determine, based on the texture image and the illumination information, color values of image pixels; and a rendering module, configured to render, based on the color values of the image pixels, so as to obtain a reflected image of the first virtual object.

An embodiment of the invention provides an electronic device, including: a memory, configured to store a computer-executable instruction or a computer program; and a processor, configured to implement, when executing the computer-executable instruction or the computer program stored in the memory, the image rendering method provided in the embodiment of the invention.

An embodiment of the invention provides a computer-readable storage medium, having a computer-executable instruction or a computer program stored therein, and configured to cause, when executed by a processor, the processor to implement the image rendering method provided in the embodiment of the invention.

An embodiment of the invention provides a computer program product, including a computer-executable instruction or a computer program, where the computer-executable instruction or the computer program is stored in a computer-readable storage medium. The processor of the electronic device reads the computer-executable instruction or the computer program from the computer-readable storage medium, and the processor executes the computer-executable instruction or the computer program, such that the electronic device executes the image rendering method provided in the embodiment of the invention.

The embodiments of the invention have the following beneficial effects.

Based on a position of a first virtual object in a virtual scene and a viewing angle of a virtual camera, parallax correction is performed on a reflection probe disposed in the virtual scene; illumination information of a reflected light ray of the first virtual object is then collected by the parallax-corrected reflection probe; color values of image pixels are then determined based on an acquired texture image of the first virtual object and the collected illumination information; and rendering is performed based on the color values of the image pixels, so as to obtain the reflected image of the first virtual object. In this way, compared with a reflection probe-based reflection scheme, the invention involves correcting a collection position of the illumination information by performing parallax correction on the reflection probe, thereby improving the accuracy of the collected illumination information, and further improving the rendering effect of the reflected image. Compared with an emitted ray-based reflection scheme, the invention improves the accuracy of the collected illumination information, thereby improving the rendering effect of the reflected image. Since there is no need to arrange additional multiple groups of reflection probes in a scene, memory overheads of the storage and maintenance of the probes are reduced. Meanwhile, the illumination information and the texture image are directly configured for pixel color calculation, thereby avoiding a correction step that needs to be supplemented due to an information deviation, reducing a rendering computational load, and optimizing the utilization efficiency of computing resources.

### BRIEF DESCRIPTION OF THE DRAWINGS

FIG. 1 is a schematic architectural diagram of an image rendering system 100 according to an embodiment of the invention.
FIG. 2 is a schematic structural diagram of an electronic device according to an embodiment of the invention.
FIG. 3 is a schematic flowchart of an image rendering method according to an embodiment of the invention.
FIG. 4 is a schematic diagram of a viewing angle of a virtual camera according to an embodiment of the invention.
FIG. 5 is a schematic diagram showing that a first virtual object reflects a view ray emitted by a virtual camera according to an embodiment of the invention.
FIG. 6 is a schematic diagram of an intersection corresponding to a reflected light ray of a virtual object according to an embodiment of the invention.
FIG. 7 is a schematic diagram of a first direction according to an embodiment of the invention.
FIG. 8 is a schematic diagram of a reflection probe according to an embodiment of the invention.
FIG. 9 is a schematic diagram of at least two grid cells according to an embodiment of the invention.
FIG. 10 is a schematic diagram illustrating a process of updating a position of a reflection probe according to an embodiment of the invention.
FIG. 11 is a schematic flowchart of updating illumination information of a virtual scene collected by a reflection probe according to an embodiment of the invention.
FIG. 12 is a schematic flowchart of supplementing illumination information of a virtual scene collected by a reflection probe according to an embodiment of the invention.
FIG. 13 is a schematic diagram of an occluder according to an embodiment of the invention.
FIG. 14 is a schematic diagram of a target position according to an embodiment of the invention.
FIG. 15 is a schematic diagram of a reflection probe-based reflection scheme according to an embodiment of the invention.
FIG. 16 is an effect diagram of a reflection probe-based reflection scheme according to an embodiment of the invention.
FIG. 17 is a schematic diagram of an emitted ray-based reflection scheme according to an embodiment of the invention.
FIG. 18 is an effect diagram of an emitted ray-based reflection scheme according to an embodiment of the invention.

### DETAILED DESCRIPTION

In order to make the purpose, technical solutions, and advantages of the invention clearer, the invention will be further described in detail below in conjunction with the accompanying drawings. The described embodiments shall not be construed as a limitation to the invention. All other embodiments obtained by persons of ordinary skill in the art without creative efforts shall fall within the scope of protection of the invention.

In the following description, "some embodiments" are involved, which describe a subgroup of all possible embodiments, but it is to be understood that "some embodiments" may be the same or different subsets of all possible embodiments and may be combined with each other without conflict.

In the following description, the terms "first\ second\ third" involved are merely intended to distinguish between similar objects, and do not indicate specific ordering of objects. "first\ second\ third" may be interchanged in a particular order or sequence where permitted, so that the embodiments of the invention described herein can be implemented in an order other than those illustrated or described herein.

Unless otherwise defined, meanings of all technical and scientific terms used herein are the same as those usually understood by a person skilled in the art to which the invention belongs. The terms used herein are intended only for the purpose of describing the embodiments of the invention and are not intended to limit the invention.

Before the embodiments of the invention are further described in detail, nouns and terms involved in the embodiments of the invention are described, and the nouns and terms involved in the embodiments of the invention are applicable to the following explanations.
1) In response to: configured for indicating a condition or a state on which executed operation depends, and when the condition or the state on which the executed operation depends is met, the one or more executed operations may be executed in real time, or may be executed with a set delay. Unless otherwise specified, there is no limitation to an execution order of multiple operations executed.
2) Client: also referred to as a user side, is a program corresponding to a server that provides a local service to a user. In addition to some applications (APPs) that can only run locally, the client is generally installed on a terminal and needs to cooperate with the server to run. In other words, the client requires a corresponding server and service program in a network to provide a corresponding service. In this way, a specific communication connection needs to be established between the client and a server side to ensure a normal operation of an APP, for example a virtual scene client (such as a game client) and a video client.
3) Artificial intelligence (AI): a theory, method, technology, and application system in which human intelligence is simulated, extended, and expanded by using a digital computer or a machine controlled by the digital computer, an environment is perceived, knowledge is acquired, and an optimal result is obtained by using the knowledge. In other words, AI is a comprehensive technology of computer science that attempts to understand the essence of intelligence and produce a new kind of intelligent machine capable of responding in a way similar to human intelligence. AI focuses on the research of design principles and implementation methods of various intelligent machines to enable the machines to have perception, reasoning, and decision-making capabilities.
4) Virtual scene: a virtual scene displayed (or provided) when an application program runs on a terminal. The virtual scene may be a simulation environment of the real world, may be a semi-simulation virtual environment, or may be a purely fictitious virtual environment. The virtual scene may be any one of a two-dimensional virtual scene, a 2.5-dimensional virtual scene, or a three-dimensional virtual scene. The embodiments of the invention impose no limitation on the dimensions of the virtual scene. For example, the virtual scene may include sky, land, ocean, and the like, where the land may include environmental elements such as deserts or cities. A user may control a virtual object to move in the virtual scene.
5) Virtual light source: a graphical element that provides an illumination effect for a virtual scene, and is obtained by simulating a real light source in the virtual scene.
6) Virtual camera: a component that simulates functions of a real camera, determines a viewing angle of observation of a virtual scene by simulating a capture function of the real camera, defines a position and an orientation of a user-controlled virtual object in a virtual environment, that is, the virtual camera is configured to determine scene content of the virtual scene observed by the user-controlled virtual object.
7) Reflection probe: configured to capture illumination information of a surrounding environment. For example, the reflection probe is placed in a 3D scene to capture illumination information at a particular position, and generate environment maps. These maps are typically stored in the form of cubemaps, and each cubemap includes six faces, where each face indicates the captured illumination information from one direction. Therefore, during rendering, these environment maps are used on the surface of an object to simulate a reflection effect.
8) Cubemap: configured to store omnidirectional illumination information in a virtual scene, and includes six squares, which correspond to six faces (front, back, left, right, up, and down) of the cube, respectively. Different faces store illumination information from different orientations. During rendering, reflection and refraction on the surface of the object are simulated by looking up the illumination information from a particular direction that is stored in the cubemap.
9) World-space illumination storage structure: an illumination information library, configured to store the illumination information of world space, including illumination information outside screen space.
10) World coordinate system: configured to define positions and orientations of all objects in a three-dimensional scene, is a global reference frame, and provides a common positioning reference for all the objects in the three-dimensional scene. The world coordinate system is a right-handed coordinate system, and usually includes the following key elements: origin, z-axis (vertical axis), x-axis (horizontal axis), and y-axis (longitudinal axis). The origin is a reference point whose coordinates are (0, 0, 0) in the world coordinate system. The positions of all the objects are defined relative to this origin. The x-axis is a horizontal axis, typically pointing to the right or left (a specific direction depends on the definition, but usually to the right side), and configured to represent a position of an object in a horizontal direction. The y-axis is also a horizontal axis, typically pointing to the front or the back (a specific direction depends on the definition, but usually to the front), and configured to represent a position of the object in a front-rear direction. The z-axis is a vertical axis, typically pointing upward. The z-axis is configured to represent a position of the object in a vertical direction.
11) Camera coordinate system: a reference system configured to describe a position and an orientation of a camera in three-dimensional space, defined from a viewing angle of the camera, and configured to simulate a viewing angle and a field of view when the camera observes a three-dimensional scene. The camera coordinate system usually includes the following key elements: origin, z-axis (vertical axis), x-axis (horizontal axis), and y-axis (longitudinal axis). The origin of the camera coordinate system is a center position of the camera itself, and is usually located at a focus of a camera lens. The z-axis of the camera coordinate system points to the front of the camera, that is, an orientation of the camera, and the z-axis is usually aligned with an optical axis of the camera. In perspective projection, the z-axis determines a line-of-sight direction. The x-axis of the camera coordinate system usually points to a right side of the camera, is perpendicular to the z axis, and forms a right-hand coordinate system (in some cases, a left-hand coordinate system may be used, for example, in OpenGL). The y-axis of the camera coordinate system usually points upward relative to the camera, and is perpendicular to the x-axis and the z-axis, completing the definition of the right-hand coordinate system.
12) Screen coordinate system: it is a two-dimensional reference system that describes a position of a touch point (such as a cursor) on a physical device (such as a display).

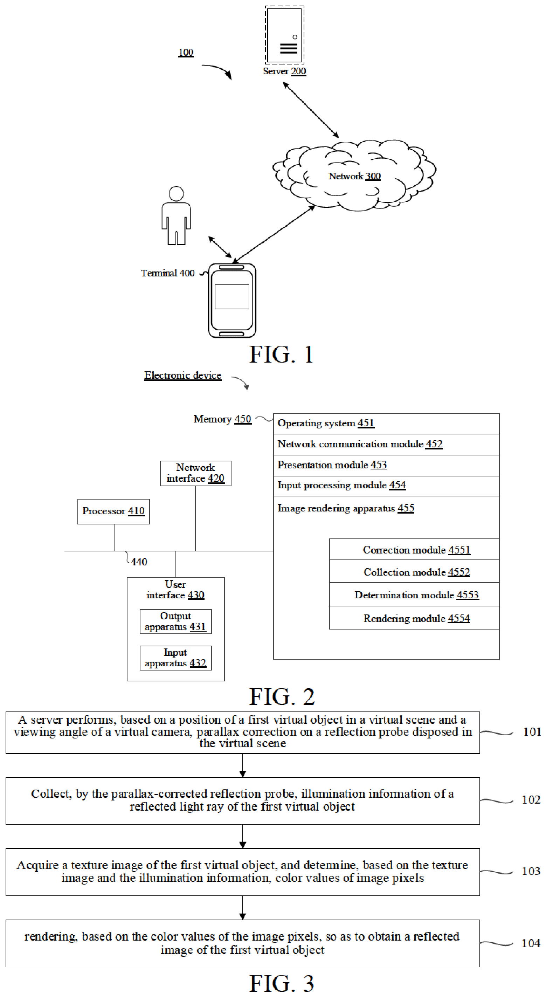

Referring to FIG. 1, FIG. 1 is a schematic architectural diagram of an image rendering system 100 according to an embodiment of the invention. A terminal, i.e., a terminal 400 shown as an example, is connected to a server 200 via a network 300. The network 300 may be a wide area network, a local area network, or a combination thereof, and implements data transmission by using a wireless or wired link.

The server 200 is configured to perform, based on a position of a first virtual object in a virtual scene and a viewing angle of a virtual camera, parallax correction on a reflection probe disposed in the virtual scene; collect, by the parallax-corrected reflection probe, illumination information of a reflected light ray of the first virtual object; acquire a texture image of the first virtual object, and determine, based on the texture image and the illumination information, color values of image pixels; render, based on the color values of the image pixels, so as to obtain a reflected image of the first virtual object; and send the reflected image of the first virtual object to the terminal 400.

The terminal 400 is configured to receive the reflected image of the first virtual object and present the reflected image of the first virtual object.

In some embodiments, the server 200 may be an independent physical server, or may be a server cluster or a distributed system including a plurality of physical servers, or may be a cloud server that provides basic cloud computing services such as cloud services, cloud databases, cloud computing, cloud functions, cloud storage, network services, cloud communications, middleware services, domain name services, security services, a content delivery network (CDN), and big data and artificial intelligence platforms. The terminal 400 may be, but is not limited to, a smartphone, a tablet computer, a laptop computer, a desktop computer, a set-top box, an intelligent voice interaction device, an intelligent appliance, a virtual reality device, an in-vehicle terminal, an aircraft, a portable music player, a personal digital assistant, a dedicated messaging device, a portable gaming device, a smart speaker, a smart watch, or the like. The terminal and the server may be directly or indirectly connected via wired or wireless communication. The embodiments of the invention impose no limitation thereon.

Next, an electronic device for implementing the image rendering method provided in an embodiment of the invention will be described. Referring to FIG. 2, FIG. 2 is a schematic structural diagram of an electronic device according to an embodiment of the invention. The electronic device may be a server, or may be a terminal. Using an example in which the electronic device is the server shown in FIG. 1, the electronic device shown in FIG. 2 includes: at least one processor 410, a memory 450, at least one network interface 420, and a user interface 430. Various components in the terminal 400 are coupled together via a bus system 440. The bus system 440 is configured to implement connection communications between these components. In addition to a data bus, the bus system 440 further includes a power bus, a control bus, and a state signal bus. However, for the sake of clarity, all types of buses are labeled as the bus system 440 in FIG. 2.

The processor 410 may be an integrated circuit chip having a signal processing capability, for example, a general-purpose processor, a digital signal processor (DSP), or other programmable logic devices, a discrete gate or a transistor logic device, or a discrete hardware component. The general-purpose processor may be a microprocessor, any conventional processor, or the like.

The user interface 430 includes one or more output apparatuses 431 enabling media content to be displayed, including at least one of one or more speakers and one or more visual display screens. The user interface 430 further includes one or more input apparatuses 432, including user interface components that facilitate user input, such as a keyboard, a mouse, a microphone, a touch screen display, a camera, and other input buttons and controls.

The memory 450 may be removable, irremovable, or a combination thereof. Exemplary hardware devices include a solid-state memory, a hard disk drive, an optical disk drive, and the like. In some embodiments, the memory 450 includes one or more storage devices that are physically located away from the processor 410.

The memory 450 includes a volatile memory or a non-volatile memory, or may include both the volatile memory and the non-volatile memory. The non-volatile memory may be a read-only memory (ROM), and the volatile memory may be a random access memory (RAM). The memory 450 described in the embodiments of the invention is intended to include a memory of any suitable type.

In some embodiments, the memory 450 can store data, so as to support various operations. Examples of the data include a program, a module, and a data structure, or a subset or a superset thereof, which will be exemplarily described below.

An operating system 451 includes a system program configured to process various basic system services and execute hardware-related tasks, e.g., a framework layer, a core library layer, and a driver layer, and is configured to implement various basic services and process hardware-based tasks.

A network communication module 452 is configured to reach other electronic devices via one or more (wired or wireless) network interfaces 420. The exemplary network interfaces 420 include: Bluetooth, Wireless Fidelity (WiFi), a universal serial bus (USB), and the like.

A presentation module 453 is configured to enable information (for example, a user interface configured to operate a peripheral device and display content and information) to be displayed via one or more output apparatuses 431 (for example, a display screen or a speaker) associated with the user interface 430.

An input processing module 454 is configured to detect one or more user inputs or interactions from one of the one or more input apparatuses 432 and translate the detected input or interaction.

In some embodiments, an apparatus provided in the embodiments of the invention may be implemented in a software manner. FIG. 2 shows an image rendering apparatus 455 stored in the memory 450. The image rendering apparatus may be software in the form of a program, a plug-in, and the like, and includes the following software modules: a correction module 4551, a collection module 4552, a determination module 4553, and a rendering module 4554. These modules are logical, and thus may be freely combined or further divided according to their implemented functions. Functions of each module will be described below.

In some other embodiments, the apparatus provided in the embodiments of the invention may be implemented in a hardware manner. For example, the image rendering apparatus provided in the embodiments of the invention may be a processor in the form of a hardware decoding processor. The image rendering apparatus is programmed, so as to execute the image rendering method provided in the embodiments of the invention. For example, the processor in the form of a hardware decoding processor may be one or more application specific integrated circuits (ASICs), DSPs, programmable logic devices (PLDs), complex programmable logic devices (CPLDs), field-programmable gate arrays (FPGAs), or other electronic elements.

In some embodiments, the terminal or the server may implement, by running a computer program, the image rendering method provided in the embodiments of the invention. By way of example, the computer program may be a native program or a software module in an operating system. The computer program may be a native application (APP), that is, a native client, i.e., a program that needs to be installed in the operating system before the program can run, such as an instant messaging APP or a web browser APP. It may also be a mini program, that is, a program that can run once downloaded into a browser environment. The computer program may also be a mini program that can be embedded into any APP. In summary, the above-mentioned computer program may be any form of client, module, or plug-in.

Based on the above-mentioned description of the image rendering system and the electronic device provided in the embodiments of the invention, the image rendering method provided in an embodiment of the invention will be described below. In actual implementation, the image rendering method provided in the embodiments of the invention may be implemented independently by a terminal or a server, or may be implemented cooperatively by the terminal and the server. The description will be given below by using an example in which the server 200 in FIG. 1 independently executes the image rendering method provided in the embodiments of the invention. Referring to FIG. 3, FIG. 3 is a schematic flowchart of an image rendering method according to an embodiment of the invention. Next, the description will be given in conjunction with the operations shown in FIG. 3.

Operation 101: A server performs, based on a position of a first virtual object in a virtual scene and a viewing angle of a virtual camera, parallax correction on a reflection probe disposed in the virtual scene.

In actual implementation, the virtual scene may be a virtual game scene, an audio/video live-streaming scene, or the like. The first virtual object in the virtual scene is an object having high reflectivity in the virtual scene. An object having high reflectivity refers to an object whose reflectivity reaches a target reflectivity, for example, mirrors, flowing water, glass, or metal. Before the server performs, based on the position of the first virtual object in the virtual scene and the viewing angle of the virtual camera, parallax correction on the reflection probe disposed in the virtual scene, the server first acquires an image rendering request sent by a terminal. The image rendering request is configured for requesting to acquire a reflected image of the first virtual object in the virtual scene. For example, using an example in which the virtual scene is the virtual game scene, the terminal first displays the virtual scene. When a viewing angle of a player character controlled by the terminal turns towards the virtual object having high reflectivity, the terminal sends the image rendering request to the server. Therefore, the server performs, in response to the image rendering request and based on the position of the first virtual object in the virtual scene and the viewing angle of the virtual camera, the parallax correction on the reflection probe disposed in the virtual scene.

Before performing, based on the position of the first virtual object in the virtual scene and the viewing angle of the virtual camera, parallax correction on the reflection probe disposed in the virtual scene, the server first determines the virtual camera in the virtual scene. The virtual camera serves as a viewpoint herein. The viewing angle of the virtual camera is a field of view of the virtual camera, i.e., a range of observation. The virtual scene is presented based on content of the virtual scene within the viewing angle of the virtual camera. That is, only the content of the virtual scene within the viewing angle of the virtual camera is displayed on a screen configured to present the virtual scene.

A view ray emitted by the virtual camera in the virtual scene is configured for collecting illumination information for the virtual camera. For example, from a position of the virtual camera, a light ray is emitted to each position in the virtual scene within the range of observation of the virtual camera, and a path of this light ray in the scene is determined. When the light ray intersects with an object, the color at that position is calculated according to a material of the object and an illumination condition, and this color is assigned to a pixel at the corresponding position. As described above, the content of the virtual scene within the viewing angle of the virtual camera is displayed on the screen configured to present the virtual scene. Therefore, when the content of the virtual scene within the viewing angle of the virtual camera is displayed based on the screen, a color value of each pixel within the viewing angle of the virtual camera on the screen is determined first, so that the content of the virtual scene within the viewing angle of the virtual camera can be displayed on the screen based on the color value of each pixel.

For the view ray emitted by the virtual camera in the virtual scene, outside the virtual scene, there may be a virtual light source configured to illuminate the virtual scene. The illumination information is generated when a virtual light ray emitted by the virtual light source illuminates the virtual scene. The virtual scene is presented by collecting the illumination information generated when the virtual light ray emitted by the virtual light source illuminates the virtual scene. The illumination information herein indicates color information at a corresponding position when the virtual light ray illuminates the corresponding position, that is, the color value of each pixel at the corresponding position. Therefore, when the virtual light ray emitted by the virtual light source illuminates the virtual scene, the virtual light ray is reflected at the corresponding position and then reflected to the virtual camera. In this way, the virtual camera can "see" the illumination information of the corresponding position, i.e., can collect the illumination information of the corresponding position, so as to present the corresponding position on the screen. The view ray emitted by the virtual camera may be a light ray in an opposite direction to the virtual light ray reflected to the virtual camera. That is, the view ray emitted by the virtual camera is the same light ray as the virtual light ray reflected by the virtual light source to the virtual camera, only differing in direction. The illumination information corresponding to the view ray emitted by the virtual camera and the virtual light ray reflected by the virtual light source to the virtual camera is illumination information at the same position.

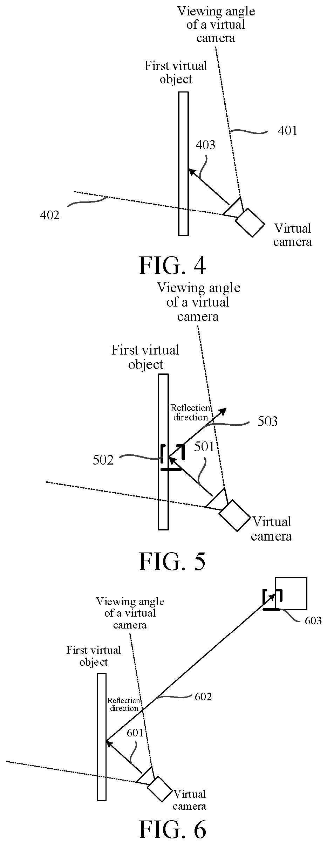

For example, referring to FIG. 4, FIG. 4 is a schematic diagram of a viewing angle of a virtual camera according to an embodiment of the invention. Based on FIG. 4, a range from 401 to 402 is the viewing angle of the virtual camera, i.e., a range of observation, and 403 is a view ray emitted by the virtual camera.

In actual implementation, content of a virtual scene within the viewing angle of the virtual camera changes. For example, when playing a game, a user changes the content of the presented virtual scene by adjusting the viewing angle. In this way, the process of performing, based on the position of the first virtual object in the virtual scene and the viewing angle of the virtual camera, parallax correction on the reflection probe disposed in the virtual scene includes acquiring the position of the first virtual object in the virtual scene; and when it is determined that the first virtual object exists within the viewing angle of the virtual camera, performing, based on the position of the first virtual object, the parallax correction on the reflection probe disposed in the virtual scene.

Since the first virtual object has reflectivity, the first virtual object reflects the view ray emitted by the virtual camera. For example, referring to FIG. 5, FIG. 5 is a schematic diagram showing that a first virtual object reflects a view ray emitted by a virtual camera according to an embodiment of the invention. Based on FIG. 5, when a view ray as indicated by 501 that is emitted by the virtual camera is reflected at a position indicated by dashed box 502 when being incident on the first virtual object, a reflected light ray as indicated by 503 is formed.

Therefore, after the first virtual object reflects the view ray emitted by the virtual camera, the reflected light ray obtained by reflecting the view ray by the first virtual object further illuminates other positions in the virtual scene. That is, there is still a hit position for the reflected light ray in the virtual scene. The hit position herein is a position that the reflected light ray illuminates. Thus, the hit position of the reflected light ray in the virtual scene is determined, and based on the hit position, the parallax correction is performed on the reflection probe.

Meanwhile, as described above, outside the virtual scene, there is a virtual light source configured to illuminate the virtual scene. The reflection probe is configured to collect the illumination information in the virtual scene, i.e., the illumination information generated when the virtual light ray emitted by the virtual light source illuminates the virtual scene. "The illumination information generated when the virtual light ray illuminates the virtual scene can be collected by the reflection probe" refers to that the virtual light ray is reflected to the reflection probe via the virtual object in the virtual scene when illuminating the virtual scene, so that the reflection probe can "see" the illumination information of the virtual object, i.e., can collect the illumination information in the virtual scene.

Therefore, the parallax correction is performed on the reflection probe. To be specific, a collection direction of the reflection probe for the illumination information in the virtual scene is corrected. Accordingly, the process of performing, based on the hit position, the parallax correction on the reflection probe disposed in the virtual scene may be as follows: based on the position of the first virtual object in the virtual scene and the viewing angle of the virtual camera, parallax correction is performed on the reflection probe disposed in the virtual scene. That is, based on the position of the first virtual object in the virtual scene and the viewing angle of the virtual camera, an intersection between the reflected light ray of the first virtual object and a second virtual object in the virtual scene is determined. A first direction that points from the position of the reflection probe to the intersection is determined, and a direction in which the reflection probe collects the illumination information of the reflected light ray of the first virtual object is adjusted to be the first direction.

The second virtual object herein is any virtual object in the virtual scene other than the first virtual object. The intersection between the reflected light ray of the first virtual object and the second virtual object in the virtual scene is the hit position mentioned above. The hit position may be a point, or may be a region, which will not be limited in the embodiments of the invention. A size of the hit position is associated with an illumination range of the reflected light ray. For example, when the illumination range of the reflected light ray is a pixel, the hit position is a point, and when the illumination range of the reflected light ray is a patch region, the hit position is a region.

The reflected light ray preferentially collides with the nearest virtual object along a propagation path, and the collision position is determined as a hit position corresponding to the virtual object. The illumination information carried by the hit position most closely matches an initial feedback state of a reflection path, so that interference from a distant object can be avoided to the greatest extent. Therefore, when the reflected light ray hits a plurality of virtual objects simultaneously, the virtual object that is the first hit along the propagation path of the reflected light ray starting from the first virtual object may be determined as the second virtual object. Alternatively, a material reflectivity of the virtual objects is acquired, and a virtual object having the highest material reflectivity is determined as the second virtual object. The material reflectivity is preset, the material reflectivity corresponds to a material of the virtual object, a corresponding material reflectivity may be determined based on the material of the virtual object. The material reflectivity is configured for characterizing the ability of the surface of the virtual object to preserve original illumination information of the reflected light ray.

For example, referring to FIG. 6, FIG. 6 is a schematic diagram of an intersection corresponding to a reflected light ray of a virtual object according to an embodiment of the invention. Based on FIG. 6, when a view ray as indicated by 601 that is emitted by the virtual camera is reflected when being incident upon the virtual object, a reflected light ray as indicated by 602 is formed. The reflected light ray is incident upon the virtual scene, and hits a position outside the viewing angle of the virtual camera, i.e., the intersection between the reflected light ray and the second virtual object in the virtual scene, as indicated by dashed box 603.

The direction to collect the illumination information of the reflected light ray of the first virtual object by the reflection probe is adjusted to be the first direction. That is, the collection direction of the reflection probe for the intersection, i.e., the hit position, is adjusted to be the first direction. The collection direction is a direction in which the illumination information generated when the reflected light ray illuminates the intersection is collected by the reflection probe.

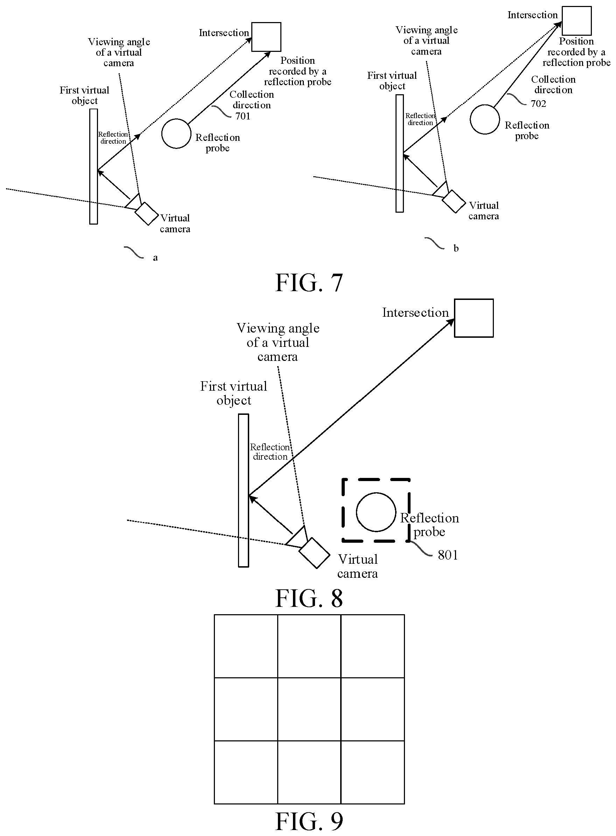

For example, referring to FIG. 7, FIG. 7 is a schematic diagram of a first direction according to an embodiment of the invention. Based on FIG. 7, in FIG. 7(a), before parallax correction is performed on the reflection probe, 701 indicates the collection direction of the reflection probe for the intersection, i.e., the hit position. After parallax correction is performed, a line connecting the reflection probe to the intersection is established, and then the direction in which the illumination information at the intersection is collected by the reflection probe is adjusted to a direction, indicated by 702 in FIG. 7(b), that points from the position of the reflection probe to the intersection.

In this way, by using the first direction that points from the position of the reflection probe to the above-mentioned intersection as the direction in which the illumination information at the hit position of the reflected light ray is collected by the reflection probe, the accuracy of a collection position of the reflection probe is ensured, thereby improving the accuracy of the illumination information collected by the reflection probe, and further improving the rendering effect of the reflected image.

In actual implementation, before performing, based on the position of the first virtual object in the virtual scene and the viewing angle of the virtual camera, parallax correction on the reflection probe disposed in the virtual scene, the position of the reflection probe also needs to be determined. For example, a spatial coordinate system of the virtual scene is constructed, and first coordinates of the reflection probe are determined in the spatial coordinate system. Therefore, the process of determining the first direction that points from the position of the reflection probe to the intersection may involve: acquiring second coordinates of the intersection in the spatial coordinate system; and subtracting the first coordinates from the second coordinates, so as to obtain a vector that points from the reflection probe to the hit position, and determining a direction indicated by the vector as the first direction.

As described above, the intersection between the reflected light ray of the first virtual object and the second virtual object in the virtual scene may be a point, or may be a region. When the illumination range of the reflected light ray is a pixel, the intersection is a point. Therefore, the second coordinates of the intersection in the spatial coordinate system are coordinates of the pixel in the spatial coordinate system. When the illumination range of the reflected light ray is a patch region, the intersection is a region. In this case, the second coordinates may be determined in the following way: randomly selecting coordinates of a pixel in the region as the second coordinates; or, determining maximum boundary coordinates and minimum boundary coordinates of the region along each coordinate axis in the spatial coordinate system, calculating an average value of the maximum boundary coordinates and the minimum boundary coordinates along each coordinate axis, based on the average value of the maximum boundary coordinates and the minimum boundary coordinates along each coordinate axis, determining coordinates of a geometric center point of the region, and using the coordinates of the geometric center point of the region as the second coordinates; or, selecting a preset quantity of sampling points on the boundary of the region, performing a weighted average calculation on coordinates of each sampling point according to a preset weight to obtain the second coordinates. A value of the weight may be inversely proportional to a distance to the central axis of the reflected light ray. That is, the smaller the distance to the central axis of the reflected light ray, the larger the weight.

In this way, by constructing the spatial coordinate system of the virtual scene and then performing a vector calculation to determine the first direction that points from the position of the reflection probe to the above-mentioned intersection, the accuracy of the determined first direction is ensured, thereby improving the accuracy of illumination information collected based on the first direction, and further improving the rendering effect of the reflected image.

In actual implementation, before performing, based on the position of the first virtual object in the virtual scene and the viewing angle of the virtual camera, parallax correction on the reflection probe disposed in the virtual scene, the reflection probe of the virtual scene also needs to be acquired. As described above, the reflection probe is configured to collect the illumination information in the virtual scene

For a process of acquiring the reflection probe of the virtual scene, when no reflection probe exists in the virtual scene yet, the process of acquiring the reflection probe of the virtual scene may involve: acquiring a position of the virtual camera in the virtual scene; generating, based on the position of the virtual camera, the reflection probe; and when a reflection probe already exists in the virtual scene already, the process of acquiring the reflection probe of the virtual scene is directly acquiring the generated reflection probe.

The process of generating the reflection probe based on the position of the virtual camera may be acquiring preset attribute information of a reflection probe, where the attribute information includes a type, a size, a sampling range, an intensity, and the like of the reflection probe; and then, generating, based on the attribute information of the reflection probe, the reflection probe at a position that is associated with the virtual camera. The position that is associated with the virtual camera refers to a surrounding position of the virtual camera, for example, any position at a target distance from the virtual camera. For example, referring to FIG. 8, FIG. 8 is a schematic diagram of a reflection probe according to an embodiment of the invention. Based on FIG. 8, a dashed box 801 indicates the reflection probe generated at the position that is associated with the virtual camera.

In this way, the reflection probe is generated based on the position of the virtual camera. This ensures that the reflection probe can collect all illumination information within the range of observation of the virtual camera, thereby improving the rendering effect of the reflected image obtained by rendering based on the illumination information.

In actual implementation, after the reflection probe is generated, the position of the reflection probe may further be updated. There are multiple ways to update the position of the reflection probe. Next, the process of updating the position of the reflection probe will be described by using three of the above-mentioned ways as an example.

In some embodiments, the process of updating the position of the reflection probe may involve: detecting the position of the virtual camera; and updating, in response to the position of the virtual camera changing from a first position to a second position and based on the second position of the virtual camera, the position of the reflection probe.

The position of the virtual camera may be detected in real time or periodically, which will not be limited in the embodiments of the invention. The first position and the second position are two different positions in the virtual scene. The process of updating, based on the second position of the virtual camera, the position of the reflection probe is placing the reflection probe at a position that is associated with the second position of the virtual camera. Herein, the position that is associated with the second position refers to a surrounding position of the second position, e.g., any position at a target distance from the second position.

In this way, when the position of the virtual camera changes, the position of the reflection probe is synchronously updated. This ensures that all illumination information within the viewing angle of the virtual camera can be collected by the reflection probe, i.e., omissions of illumination information to be collected by the reflection probe are avoided, thus improving the rendering effect of the reflected image obtained by rendering based on the illumination information. Meanwhile, compared with a solution in the related art in which artists are required to manually adjust positions where reflection probes are placed and a large quantity of reflection probes need to be placed in a virtual scene, the above-mentioned solution not only improves the rendering effect, but also reduces the labor costs and resource consumption.

In actual implementation, the process of updating, in response to the position of the virtual camera changing from the first position to the second position and based on the second position of the virtual camera, the position of the reflection probe may involve: determining, in response to the position of the virtual camera changing from the first position to the second position, a difference between the first position and the second position; and updating, in response to the difference reaching a difference threshold, the position of the reflection probe.

The process of determining a difference between the first position and the second position may involve: constructing a spatial coordinate system of the virtual scene; acquiring coordinates of the first position and coordinates of the second position in the spatial coordinate system; and determining, based on the coordinates of the first position and the coordinates of the second position, a distance, i.e., the difference, between the first position and the second position by formula (1): $P = \sqrt{{\left({x}_{1}-{x}_{2}\right)}^{2} + {\left({y}_{1}-{y}_{2}\right)}^{2} + {\left({z}_{1}-{z}_{2}\right)}^{2}}$ formula (1)

In the formula, P is the distance, i.e., the difference, between the first position and the second position. The spatial coordinate system herein is a world coordinate system in the virtual scene, is configured for defining positions and orientations of all objects in a three-dimensional scene, is a global reference frame, and provides a common positioning reference for all the objects in the three-dimensional scene. The coordinates of the first position are (*x*₁, *y*₁, *z*₁), and the coordinates of the second position are (*x*₂, *y*₂, *z*₂).

The position of the reflection probe is updated when the difference reaches a difference threshold. Herein, the difference threshold is preset. The process of updating, in response to the difference reaching the difference threshold, the position of the reflection probe refers to updating, based on the second position of the virtual camera in response to the difference reaching the difference threshold, the position of the reflection probe.

In this way, when the virtual camera moves far enough, i.e., beyond a distance exceeding the difference threshold, the position of the reflection probe is updated, thereby avoiding omissions of illumination information to be collected by the reflection probe around the virtual camera, and thus improving the rendering effect of the reflected image obtained by rendering based on the illumination information.

In some embodiments, the virtual scene is divided into at least two grid cells, so that the process of updating the position of the reflection probe may involve: detecting the position of the virtual camera; and updating, in response to the position of the virtual camera changing from being in a first grid cell to being in a second grid cell and based on the second grid cell, the position of the reflection probe. The position of the virtual camera may be detected in real time or periodically, which will not be limited in the embodiments of the invention.

The process of dividing the virtual scene into the at least two grid cells may involve: evenly dividing the virtual scene into at least two grid cells having a same size, or may involve: directly dividing the virtual scene into at least two different grid cells which may have a same size or may have different sizes.

In actual implementation, a division mode for the virtual scene may be determined based on movement features of the virtual camera. For example, if no high-frequency region exists in the virtual scene in which a movement frequency of the virtual camera is higher than a preset threshold, a uniform division mode may be employed to divide the virtual scene into grid cells of the same size. If a high-frequency region exists in the virtual scene in which the movement frequency of the virtual camera is higher than the preset threshold, e.g., mandatory paths of main game quest and connecting paths between popular interactive zones, the high-frequency region may be divided into smaller grid cells. That is, the grid cells obtained by division in the high-frequency region in the virtual scene are smaller than grid cells in other regions. In this way, by improving the detection precision of cross-cell switching of the virtual camera and the update sensitivity of the position of the reflection probe, the reflection probe can more precisely follow the frequent movement of the camera in this region, so as to promptly adapt to a change in the viewing angle and an illumination information collection requirement. This ensures the precision and coherence of reflection rendering in a high-frequency interaction scene, and also avoids an update lag or collection omission caused by oversized grid cells.

For example, referring to FIG. 9, FIG. 9 is a schematic diagram of at least two grid cells according to an embodiment of the invention. Based on FIG. 9, the virtual scene is divided into tiles, so as to obtain at least two grid cells of an equal size, e.g., nine grid cells of an equal size in FIG. 9.

In actual implementation, when the position of the virtual camera changes from being in the first grid cell to being in the second grid cell, the position of the reflection probe is updated based on the second grid cell. The process of updating, based on the second grid cell, the position of the reflection probe is similar to the foregoing process of updating, based on the second position of the virtual camera, the position of the reflection probe. For example, the process of updating, based on the second grid cell, the position of the reflection probe is placing the reflection probe at a position that is associated with the second grid cell. Herein, the position that is associated with the second grid cell refers to a surrounding position of the second grid cell, e.g., any position at a target distance from the second position, or a central position within the second grid cell, i.e., in the second grid cell, which will not be limited in the embodiments of the invention.

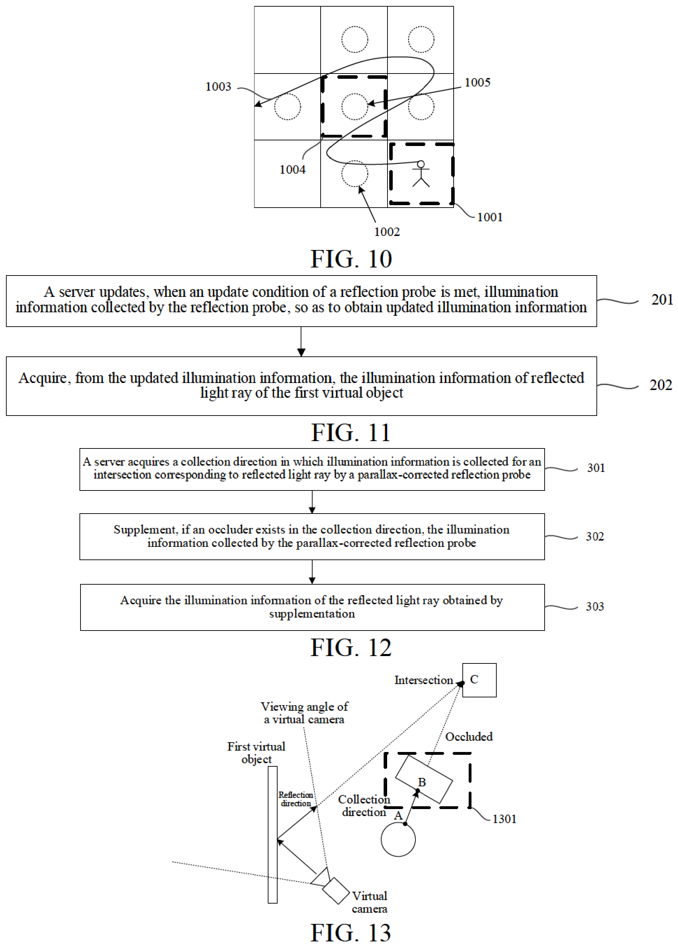

For example, referring to FIG. 10, FIG. 10 is a schematic diagram illustrating a process of updating a position of a reflection probe according to an embodiment of the invention. Based on FIG. 10, dashed box 1001 indicates a virtual camera, and 1003 indicates a movement trajectory of the virtual camera in a virtual scene. Based on the movement trajectory, when the virtual camera moves to different grid cells, the position of the virtual probe is also updated. Using a grid cell indicated by dashed box 1004 as an example, when the position of the virtual camera moves to the grid cell indicated by dashed box 1004, the position of the reflection probe is updated from a position indicated by 1002 to a position indicated by 1005.

The change in the position of the virtual camera in the above-mentioned process is due to a change in the position of the player character controlled by the terminal. Since the viewing angle of the virtual camera is a viewing angle range of the player character, once the position of the player character changes, the position of the virtual camera changes accordingly. Therefore, the virtual camera indicated by dashed box 1001 in FIG. 10 is presented in a character form.

In this way, when the position of the virtual camera changes from being in the first grid cell to being in the second grid cell, the position of the reflection probe is synchronously updated. This ensures that all illumination information within the viewing angle of the virtual camera can be collected by the reflection probe, i.e., avoiding omissions of illumination information to be collected by the reflection probe around the virtual camera, and thus improving the rendering effect of the reflected image obtained by rendering based on the illumination information. Meanwhile, compared with a solution in the related art in which artists are required to manually adjust positions where reflection probes are placed and a large quantity of reflection probes need to be placed in a virtual scene, the above-mentioned solution not only improves the rendering effect, but also reduces the labor costs and resource consumption.

In some other embodiments, the virtual scene is divided into at least two grid cells, and the process of acquiring a position of the virtual camera in the virtual scene may involve: acquiring a grid cell where the virtual camera is located in the virtual scene. Therefore, the process of updating the position of the reflection probe may involve: acquiring a duration that the virtual camera is located in the grid cell; and updating the position of the reflection probe when the duration reaches a target duration.

The target duration may be preset. For example, the target duration may be five minutes, and the like. The process of dividing the virtual scene into the at least two grid cells may involve: evenly dividing the virtual scene into at least two grid cells having the same size, or may involve: directly dividing the virtual scene into at least two different grid cells which may have the same size or may have different sizes.

In actual implementation, the target duration corresponding to each grid cells obtained by division may be the same or different. For example, the target duration may be set based on a size of each grid cell obtained by division. A large-sized grid cell has a wide spatial range, so it takes longer time for the virtual camera to move from an initial position to a boundary of the grid cell. While a small-sized grid cell has a narrow spatial range, so the virtual camera may take a relatively shorter time to move to the boundary of the grid cell. Therefore, the target duration may be positively correlated with the size of the grid cell. That is, the larger the size of the grid cell, the longer the set target duration; and the smaller the size of the grid cell, the shorter the set target duration. In this way, not only frequent updates of the reflection probe and waste of computing resources due to an overly short target duration of the large-size grid cell can be avoided, but also an update lag of the reflection probe and omission of the illumination information due to an overly long target duration of the small-sized grid cell can be prevented, thereby precisely balancing a reflection rendering effect and computing resource consumption.

In actual implementation, the position of the reflection probe is updated when the duration reaches the target duration. The process of updating the position of the reflection probe is, for example, acquiring a real-time position of the virtual camera in a corresponding grid cell, and placing the reflection probe at a position that is associated with the real-time position of the virtual camera. Herein, the position that is associated with the real-time position refers to a surrounding position of the real-time position, e.g., any position that is a target distance from the real-time position.

In this way, when the duration that the virtual camera stays inside one grid cell is overly long, i.e., exceeding the target duration, the position of the reflection probe is updated. This avoids a scenario where grid cells differ in size and the reflection probe omits illumination information to be collected if the virtual camera moves within a large grid cell and moves away from the reflection probe, ensuring that all illumination information within the viewing angle of the virtual camera can be collected by the reflection probe, and thus improving the rendering effect of the reflected image obtained by rendering based on the illumination information. Meanwhile, compared with a solution in the related art in which artists are required to manually adjust positions where reflection probes are placed and a large quantity of reflection probes need to be placed in a virtual scene, the above-mentioned solution not only improves the rendering effect, but also reduces the labor costs and resource consumption.

The process of updating the position of the reflection probe may be implemented as follows: directly placing an original reflection probe at a new position, so as to update the position of the reflection probe, or deleting the original reflection probe, and generating a new reflection probe at the new position, so as to update the position of the reflection probe, which will not be limited in the embodiments of the invention. The process of generating a new reflection probe at the new position is similar to the foregoing process of generating, based on the position of the virtual camera, the reflection probe, e.g., acquiring the preset attribute information of the specified reflection probe, where the attribute information includes a type, a size, a sampling range, an intensity, and the like of the reflection probe; then, generating, based on the attribute information of the reflection probe, the reflection probe at the new position. The new position herein is, for example, the position that is associated with the second position of the virtual camera, the position that is associated with the second grid cell, or the position that is associated with the real-time position of the virtual camera.

### Operation 102: Collect, by the parallax-corrected reflection probe, illumination information of a reflected light ray of the first virtual object

Herein, the illumination information of the reflected light ray indicates color information at an intersection between the reflected light ray and the second virtual object in the virtual scene when the reflected light ray illuminates the second virtual object in the virtual scene, i.e., a color value of each pixel at the intersection. Meanwhile, as described above, the reflection probe is configured to collect the illumination information in the virtual scene. Therefore, herein, the illumination information of the reflected light ray of the first virtual object collected by the parallax-corrected reflection probe-i.e., the illumination information at the intersection illuminated by the virtual light source in the virtual scene and collected by the parallax-corrected reflection probe-is used as the illumination information of the reflected light ray collected by the parallax-corrected reflection probe.

In some embodiments, in addition to updating the position of the reflection probe, all illumination information collected by the reflection probe may also be updated. As described above, the reflection probe is configured to collect the illumination information in the virtual scene. That is, the reflection probe records the collected illumination information in the virtual scene. Herein, the illumination information in the virtual scene does not refer to the illumination information of all virtual objects in the virtual scene, but refers to the illumination information of virtual objects within a target range in the virtual scene (i.e., all illumination information within the target range in the virtual scene).

The target range refers to a range around the virtual camera, i.e., a circular region with the virtual camera as a center and a target distance as a radius. The target distance refers to a distance from the farthest position the virtual camera can observe to the virtual camera. The virtual objects within the target range in the virtual scene include the aforementioned virtual object having reflectivity, and also include a virtual object not having reflectivity. That is, the virtual object within the target range in the virtual scene herein may not have the high reflectivity, or may have the high reflectivity. Such virtual objects may be, for example, a forest, a water source, a building, a plant, or an animal, which will not be limited in the embodiments of the invention. Meanwhile, the illumination information herein refers to color information at a virtual object when the virtual light ray emitted by the virtual light source illuminates the virtual object within the target range in the virtual scene, i.e., the color value of each pixel at the virtual object. This color value is equivalent to a color value of each pixel when the virtual object is presented.

Based on this, for the process of updating the illumination information collected by the reflection probe, reference is made to FIG. 11. FIG. 11 is a schematic flowchart of updating illumination information of a virtual scene collected by a reflection probe according to an embodiment of the invention. Based on FIG. 11, the process of updating the illumination information of the virtual scene collected by the reflection probe may be implemented by the following operations.

Operation 201: A server updates, when an update condition of the reflection probe is met, the illumination information collected by the reflection probe, so as to obtain updated illumination information.

The update condition includes at least one of the following: a relative positional relationship between the parallax-corrected reflection probe and the virtual object within the target range in the virtual scene changes; and a light ray at the virtual object within the target range in the virtual scene changes.

Herein, the illumination information collected by the reflection probe is the illumination information of the virtual object within the target range in the virtual scene (i.e., all illumination information within the target range in the virtual scene). The relative positional relationship between the parallax-corrected reflection probe and the virtual object within the target range in the virtual scene changes, which may indicate the position of the reflection probe changes, but the position of the virtual object within the target range in the virtual scene remains unchanged, or the position of the reflection probe remains unchanged, but the position of the virtual object within the target range in the virtual scene changes, or both the position of the reflection probe and the position of the virtual object within the target range in the virtual scene change, which will not be limited in the embodiments of the invention.

"The relative positional relationship of the virtual object changes" refers to that the virtual object itself undergoes translational, rotational, or scaling motion, resulting in a change in the relative positional relationship between the virtual object and the reflection probe. "The position of the reflection probe changes" refers to that the reflection probe undergoes translation in tandem with the virtual camera, undergoes an independent pose adjustment, or has its position finely tuned based on parallax correction, resulting in a change in the relative positional relationship between the reflection probe and the virtual object.

When a distance between the parallax-corrected reflection probe and the virtual object within the target range in the virtual scene is greater than a preset threshold, it is determined that the relative positional relationship between the parallax-corrected reflection probe and the virtual object within the target range in the virtual scene has changed. The distance is a difference between coordinates of the reflection probe in the spatial coordinate system and coordinates of the virtual object in the spatial coordinate system.

The light ray at the virtual object within the target range in the virtual scene refers to the virtual light ray when the virtual light source illuminates the virtual object within the target range in the virtual scene, including a direct light ray and an indirect light ray. The direct light ray is a virtual light ray that is emitted by the virtual light source and that directly illuminates the corresponding virtual object. The indirect light ray is a virtual light ray that is emitted by the virtual light source and that illuminates the corresponding virtual object after undergoing at least one reflection.

In this way, when the relative positional relationship between the reflection probe and the virtual object within the target range in the virtual scene changes, and/or the light ray at the virtual object within the target range in the virtual scene changes, the illumination information collected by the reflection probe is updated, thereby ensuring the accuracy of the illumination information collected by the reflection probe, i.e., improving the effect of the reflected image obtained by rendering based on the reflection probe.

In actual implementation, when the update conditions are different, the process of updating the illumination information collected by the reflection probe, so as to obtain the updated illumination information is implemented in different ways. Next, when different update conditions are met, the process of updating the illumination information collected by the reflection probe, so as to obtain the updated illumination information will be described separately.

In some embodiments, the illumination information includes color information obtained by shading, based on texture information of the virtual object within the target range, the virtual object within the target range. Therefore, the process of updating the illumination information collected by the reflection probe, so as to obtain the updated illumination information may involve: updating, when the update condition is that the relative positional relationship changes, the texture information corresponding to the illumination information, so as to obtain new texture information; and updating, based on the new texture information, the color information, so as to obtain new color information, and using the new color information as the updated illumination information.

The texture information herein includes a shape, a normal direction, a depth value, a reflection attribute, a refractive index, and the like of a corresponding virtual object. The process of updating the texture information corresponding to the illumination information, so as to obtain the new texture information may involve re-performing geometry rendering on the virtual object within the target range, so as to obtain the new texture information. The geometry rendering herein refers to rendering each virtual object within the target range once, but only processing and storing the texture information of the virtual object, without performing illumination calculation, i.e., shading.

The performing geometry rendering on the virtual object in the target range, so as to obtain the texture information refers to acquiring attribute information (including position, size, shape, and the like) of the virtual object in model space corresponding to the virtual scene; determining, based on the attribute information of the virtual object, at least two vertices of the virtual object in the model space, constructing a spatial coordinate system corresponding to the model space, and determining coordinates and attributes (including normals, texture coordinates, tangents, and the like) of each vertex in the spatial coordinate system; performing coordinate transformation on the coordinates of each vertex in the spatial coordinate system, so as to obtain coordinates of each vertex in a screen coordinate system; and using the coordinates of each vertex in the screen coordinate system and the attributes of each vertex as the texture information of the virtual object.

The model space refers to coordinate space used when modeling the virtual object in the virtual scene, which contains information such as geometrical information and a surface normal of the virtual object. During rendering, the geometry of the virtual object is initially stored in the model space. This space is associated with the virtual object, and is usually referred to as local space or object space. The process of performing coordinate transformation on the coordinates of each vertex in the spatial coordinate system, so as to obtain the coordinates of each vertex in the screen coordinate system is, for example, transforming, based on a model matrix, the coordinates of each vertex in the spatial coordinate system corresponding to the model space to a world coordinate system corresponding to world space, so as to obtain vertex coordinates of each vertex in the world coordinate system; then, transforming, based on a view matrix, the coordinates of each vertex in the world coordinate system to a camera coordinate system corresponding to camera space, so as to obtain vertex coordinates of each vertex in the camera coordinate system; and then, transforming, based on a projection matrix, the coordinates of each vertex in the camera coordinate system to a screen coordinate system corresponding to screen space, so as to obtain vertex coordinates of each vertex in the screen coordinate system.

The model matrix includes information such as translation, rotation, and scaling of the virtual object. The view matrix defines the position and the orientation (i.e., the viewing angle) of the virtual camera. The projection matrix is configured to project three-dimensional space to a two-dimensional screen.

In actual implementation, the process of updating, based on the new texture information, the color information, so as to obtain the new color information may involve: determining, based on the new texture information, a texture image of the virtual object within the target range in the virtual scene, and determining, based on the texture image and the light ray at the virtual object, a color value of each pixel in the texture image; and using the color value of each pixel as the new color information.

For the process of determining, based on the new texture information, the texture image of the virtual object within the target range in the virtual scene, as described above, the coordinates of each vertex in the screen coordinate system and the attributes of each vertex are used as the texture information of the virtual object. Therefore, rasterization is performed based on the texture information of the virtual object, so as to obtain the texture image of the virtual object within the target range in the virtual scene, i.e., an unshaded two-dimensional image of the virtual object in the screen space. The rasterization herein is configured for converting geometric data of a virtual object into pixel data, i.e., converting a vector image (such as a straight line or a curve) into a grid image formed by pixels.

For the process of determining, based on the texture image and the light ray at the virtual object, the color value of each pixel in the texture image, for example, illumination calculation (i.e., illumination rendering, shading) is performed based on the texture image and the light ray at the virtual object, so as to obtain the color value of each pixel in the texture image, and the color value of each pixel is then determined as the new color information.

The reflection probe records information by first performing geometry rendering on a virtual object, so as to obtain texture information, and then performing illumination rendering based on the texture information, so as to obtain finally recorded color information. When the relative positional relationship changes, the texture information, such as shape information and depth information, of the virtual object recorded by the reflection probe changes. Therefore, the texture information recorded by the reflection probe needs to be updated. Meanwhile, if the texture information changes, the color information obtained by performing shading based on the texture information also changes. Based on this, when the relative positional relationship changes, there is a need to perform a full rendering pipeline. That is, texture information and color information are updated together.

In this way, when the relative positional relationship changes, the texture information and the color information of the virtual object are updated together, thereby ensuring the accuracy of the illumination information collected by the reflection probe, and further improving the rendering effect of the reflected image.

In some other embodiments, the illumination information includes color information obtained by shading, based on texture information of the virtual object within the target range, the virtual object within the target range. Therefore, the process of updating the illumination information collected by the reflection probe, so as to obtain the updated illumination information may involve: acquiring, when the update condition is that the light ray changes, the texture information corresponding to the illumination information; and updating, based on the texture information, the color information, so as to obtain the new color information, and using the new color information as the updated illumination information.

A change in the light ray may indicate a change in an attribute of the virtual light ray on the surface of the virtual object. The attribute of the virtual light ray includes at least one of the following: a luminous intensity, a luminous color, an illumination direction, and an effective illumination range of the virtual light ray

As described above, the texture information herein includes a shape, a normal direction, a depth value, a reflection attribute, a refractive index, and the like of a corresponding virtual object. The acquired texture information corresponding to the illumination information is texture information obtained by pre-rendering. Therefore, the process of updating, based on the texture information, the color information, so as to obtain the new color information may involve: acquiring, based on the new texture information, a texture image of the virtual object within the target range in the virtual scene, and determining, based on the texture image and the light ray at the virtual object, a color value of each pixel in the texture image; and using the color value of each pixel as the new color information. or it may involve: directly acquiring a texture image of a virtual object within a target range that has been acquired before the light ray changes, so as to determine, based on the texture image and the light ray at the virtual object, the color value of each pixel in the texture image; and using the color value of each pixel as the new color information.

As described above, the reflection probe records information by first performing geometry rendering on a virtual object, so as to obtain texture information, and then performing illumination rendering based on the texture information, so as to obtain finally recorded color information. When the light ray changes, it indicates that only the color information of the virtual object that is recorded by the reflection probe changes, and the texture information of the virtual object such as the shape information and the depth information does not change. Therefore, there is no need to update the texture information recorded by the reflection probe, and only the color information of the virtual object needs to be updated. Based on this, when the light ray at the virtual object changes, there is no need to perform a full rendering pipeline. That is, there is no need to update the texture information, and only reshading needs to be performed based on original texture information. That is, only the color information needs to be updated.

In this way, when the light ray at the virtual object changes, the color information of the virtual object is updated based on only the original texture information. This not only ensures the accuracy of the illumination information collected by the reflection probe, but also reduces the resource consumption during updating the illumination information collected by the reflection probe, thus ensuring the rendering effect of the reflected image on the basis of the lowest resource consumption.

In some other embodiments, when the update condition is that the relative positional relationship changes and the light ray changes, the process of updating the illumination information collected by the reflection probe, so as to obtain the updated illumination information is the same as the foregoing process of updating, when the relative positional relationship changes, the illumination information collected by the reflection probe, so as to obtain the updated illumination information, which will not be repeated in the embodiments of the invention.

In some embodiments, the reflection probe has a polyhedron shape, local illumination information in the virtual scene is recorded on different faces of the polyhedron, the local illumination information recorded on the different faces is different, and the illumination information includes the local illumination information recorded on each of the faces. Therefore, the process of updating the illumination information collected by the reflection probe, so as to obtain the updated illumination information may involve: determining an update period of the reflection probe, where the update period indicates a minimum update interval between any two faces of the polyhedron; and sequentially updating, based on the update period, the local illumination information recorded on each of the faces of the polyhedron, so as to obtain the updated illumination information.

The polyhedron may include a cube. Since the reflection probe has a polyhedron shape, and each face is configured to capture the illumination information of the virtual object in one direction, 360° illumination information can be collected by the reflection probe. That is, the illumination information of all virtual objects within the target range can be collected by the reflection probe. However, only the illumination information of the virtual object in a direction corresponding to each face, i.e., local illumination information, is recorded on each face of the reflection probe. In this way, the local illumination information recorded on each face constitutes all illumination information within the target range collected by the reflection probe.

In actual implementation, since the reflection probe includes a plurality of faces, updating the illumination information of the reflection probe is updating the local illumination information of the plurality of faces of the reflection probe. Using an example in which the polyhedron is a cube, if direct rendering is performed six times within one frame for updating, the time taken for that frame is excessively long. When a frame with reflection probe updating takes much longer, while non-updating frames consume very little time, stuttering will occur during the updating. Therefore, herein, the six faces are updated in six separate passes, with only the local illumination information on one face updated per pass, and each face updated once every other update period. The process of updating the local illumination information on one face is as described above, i.e., determining, based on a met update condition (including at least one of the following: the relative positional relationship changes, and the light ray at the virtual object changes), a specific update process of the local illumination information, which will not repeated herein in the embodiments of the invention.

The update interval refers to a frame count difference or a time difference between updates of two faces. For example, when the update interval is 10 frames, each face is updated every 10 frames. In this way, when the reflection probe is a cube, the reflection probe may be fully updated within 60 frames. The update period may be determined based on a scene frame rate in the virtual scene, or may be preset. For example, if the update interval refers to the frame count difference between the updates of the two faces, the update period is preset, for example, 10 frames. If the update interval refers to a time difference between updates of any two faces, the update period is negatively correlated with the scene frame rate. For example, when the scene frame rate is 60, the update period may be 1/6 second, and when the scene frame rate is 120, the update period may be 1/12 second.

In actual implementation, the local illumination information recorded on each face of the polyhedron is updated sequentially based on the update period, until the update of the local illumination information on each face is completed, thereby obtaining the updated illumination information. In this way, the updates of the reflection probe are distributed across multiple frames, thereby avoiding stuttering caused by updating the reflection probe. In this way, the update of the reflection probe can be implemented without reducing smoothness. Meanwhile, update loads of each face of the polyhedron are distributed across multiple frames, thereby ensuring the timeliness and accuracy in updating the illumination information, and avoiding instantaneous computational overload caused by centralized update of all faces within a single frame. In this way, the occupation of hardware resources is more balanced, thereby reducing idle resources and peak waste, and significantly improving the resource utilization rate of hardware.

Operation 202: Acquire, from the updated illumination information, the illumination information of the reflected light ray of the first virtual object.

In actual implementation, if the illumination information of the virtual scene collected by the reflection probe is updated before the collecting, by the parallax-corrected reflection probe, illumination information of a reflected light ray of the first virtual object, the process of collecting the illumination information of the reflected light ray of the first virtual object by the parallax-corrected reflection probe is acquiring the illumination information of the reflected light ray of the first virtual object from the updated illumination information. In this way, it is ensured that the acquired illumination information is the latest illumination information.

In some embodiments, since there are many virtual objects in the virtual scene, the collection direction of the reflection probe may be obstructed. If the collection direction of the reflection probe is obstructed, it is necessary to supplement the illumination information collected by the reflection probe. For example, referring to FIG. 12, FIG. 12 is a schematic flowchart of supplementing illumination information of a virtual scene collected by a reflection probe according to an embodiment of the invention. Based on FIG. 12, the process of supplementing the illumination information of the virtual scene collected by the reflection probe may be implemented by the following operations.

Operation 301: The server acquires a collection direction in which the parallax-corrected reflection probe collects the illumination information for the intersection corresponding to the reflected light ray.

The intersection corresponding to the reflection probe is a position where the reflected light ray of the first virtual object intersects with the second virtual object in the virtual scene. The process of acquiring the collection direction in which the parallax-corrected reflection probe collects the illumination information for the intersection corresponding to the reflected light ray is described above. In some embodiments, after the position of the reflection probe is determined, a direction that points from the position of the reflection probe to the intersection is used as the collection direction of the reflection probe to collect the illumination information at the intersection.

### Operation 302: Supplement, if an occluder exists in the collection direction, the illumination information collected by the parallax-corrected reflection probe

The occluder indicates virtual objects that can block the propagation of light rays in a virtual scene, which may be, for example, animals, buildings, or boxes. As described above, the virtual light ray when the virtual light source illuminates the virtual object within the target range in the virtual scene includes the direct light ray and the indirect light ray. The direct light ray is a virtual light ray that is emitted by the virtual light source and that directly illuminates the corresponding virtual object, such as the intersection. The indirect light ray is a virtual light ray that is emitted by the virtual light source and that illuminates the corresponding virtual object, such as the intersection, after undergoing at least one reflection. Therefore, when no occluder exists, the reflection probe can collect the illumination information at the intersection by the virtual light ray. However, when an occluder exists, the reflection probe cannot collect the illumination information at the intersection via the virtual light ray. Instead, it can only collect the illumination information at the occluder via the virtual light ray.

"The illumination information at the intersection can be collected by the reflection probe" refers to that when illuminating the intersection, the direct light ray or the indirect light ray is reflected to the reflection probe via the intersection on the virtual object, so that the reflection probe can "see" the illumination information at the intersection, i.e., can collect the illumination information at the intersection. Since an occluder exists in the collection direction, when a direct light ray or an indirect light ray illuminates the intersection, it cannot be reflected to the reflection probe via the intersection on the virtual object, so that the reflection probe cannot "see" the illumination information at the intersection, which is equivalent to that the illumination information at the intersection cannot be collected by the reflection probe. However, when a direct light ray or an indirect light ray illuminates the occluder, it may be reflected to the reflection probe via the occluder, so that the reflection probe can "see" the illumination information at the occluder, that is, the illumination information at the occluder can be collected by the reflection probe.

For example, referring to FIG. 13, FIG. 13 is a schematic diagram of an occluder according to an embodiment of the invention. Based on FIG. 13, dashed box 1301 indicates an occluder that blocks a reflection probe from collecting illumination information in a virtual scene.

Based on this, if an occluder exists in the collection direction, the illumination information collected by the parallax-corrected reflection probe is supplemented, so that the illumination information at the intersection can be collected by the reflection probe. In this way, when an occluder exists in the collection direction, the collected illumination information is supplemented, so that the reflection probe can collect the illumination information occluded by the occluder, thereby improving the comprehensiveness of the illumination information collected by the reflection probe, and avoiding the problem of a poor rendering effect of a reflected image caused by missing illumination information, i.e., improving the rendering effect of the reflected image.

In actual implementation, for the process of determining that an occluder exists in the collection direction, in some embodiments, before the illumination information collected by the parallax-corrected reflection probe is supplemented, the following may be further performed: constructing the spatial coordinate system of the virtual scene, and determining a depth of the reflection probe in the collection direction in the spatial coordinate system; acquiring third coordinates of the reflection probe in the spatial coordinate system, and acquiring fourth coordinates of the intersection in the spatial coordinate system; determining, based on the third coordinates and the fourth coordinates, a distance between the reflection probe and the intersection; and determining, when the distance is greater than the depth of the reflection probe in the collection direction, that an occluder exists in the collection direction of the reflection probe.

The spatial coordinate system herein is a camera coordinate system, i.e., a coordinate system corresponding to the virtual camera. It is a reference system configured to describe a position and an orientation of a virtual camera in three-dimensional space, defined from a viewing angle of the virtual camera, and configured to simulate a viewing angle and a field of view when the virtual camera observes a three-dimensional scene. Since the reflection probe is a polyhedron such as a cube, each face of the reflection probe has a corresponding depth. The depth of each face of the reflection probe is a vertical coordinate of coordinates of each face of the reflection probe in the camera coordinate system. However, in the camera coordinate system, the process of determining a depth of the reflection probe in the collection direction involves using the vertical coordinate, i.e., the depth, of the face corresponding to the collection direction among the plurality of faces of the reflection probe as the depth of the reflection probe in the collection direction.

Each face of the polyhedron is pre-assigned with a main collection direction consistent with its normal direction. For example, the main collection direction of a front surface of the cube is a direction perpendicular to the face pointing outward. An included angle between the collection direction (a spatial direction of the reflection probe for the intersection) and the main collection direction of each face is calculated. When the included angle between the main collection direction of a face and the collection direction is less than a preset threshold, the face is determined as a face corresponding to the collection direction

For the process of determining the third coordinates of the reflection probe in the spatial coordinate system, and acquiring the fourth coordinates of the intersection in the spatial coordinate system, and then determining, based on the third coordinates and the fourth coordinates, the distance between the reflection probe and the intersection, reference may be made to the foregoing formula (1). In this way, when the distance is greater than the depth of the reflection probe in the collection direction, it is determined that the intersection is behind an occluder. That is, it is determined that an occluder exists in the collection direction of the reflection probe for the intersection.

For example, with further reference to FIG. 13, based on the third coordinates and the fourth coordinates, the distance between the reflection probe and the intersection is determined, as shown by AC, and the depth of the reflection probe in the collection direction is determined, as shown by AB. Based on FIG. 13, when the distance is greater than the depth of the reflection probe in the collection direction, it is determined that the intersection is behind an occluder. That is, it is determined that an occluder exists in the collection direction of the reflection probe for the intersection.

In this way, whether an occluder exists in the collection direction of the reflection probe is determined based on the depth of the reflection probe, thereby avoiding erroneous determination when determining whether an occluder exists in the collection direction, and improving the accuracy in determining whether an occluder exists, so that when it is determined that an occluder exists in the collection direction, the illumination information collected by the reflection probe can be supplemented in a timely manner.

In actual implementation, if an occluder exists in the collection direction, there are multiple processes to supplement the illumination information collected by the parallax-corrected reflection probe. Next, two of these will be described below as examples to illustrate the process of supplementing the illumination information collected by the parallax-corrected reflection probe.

In some embodiments, the process of supplementing the illumination information collected by the parallax-corrected reflection probe may involve: adjusting the position of the reflection probe to a target position, where no occluder exists in a collection direction of the reflection probe at the target position toward the intersection, and the target position indicates a position where the reflection probe is capable of collecting the illumination information at the intersection; and acquiring the illumination information of the reflected light ray of the first virtual object collected by the reflection probe at the target position.

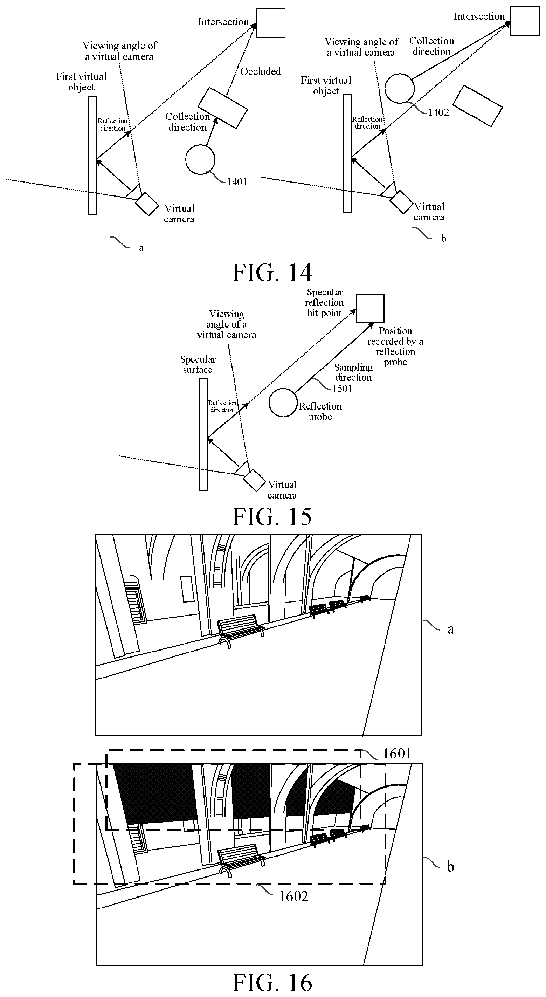

The process of determining the target position may involve: first, determining, based on a size of the occluder and the intersection, an occlusion range of the occluder, for example, emitting rays to the surroundings by using the intersection as a starting point, and then selecting, from at least two rays, a ray that has an intersection with the occluder, so as to use a range formed by the ray that has an intersection with the occluder as the occlusion range of the occluder; and then, outside the occlusion range of the occluder, selecting any position around the virtual camera as the target position. For example, referring to FIG. 14, FIG. 14 is a schematic diagram of a target position according to an embodiment of the invention. Based on FIG. 14, if an occluder exists in the collection direction, the position of the reflection probe is moved from a position indicated by 1401 in FIG. 14(a) to a target position indicated by 1402 in FIG. 14(b).

The illumination information of the reflected light ray collected by the reflection probe at the target position for the intersection is then used as illumination information for supplementation.

In actual implementation, a position where historical sampling information has been cached may be selected as the target position. The historical sampling information refers to the illumination information collected and stored at that position in a previous frame, and the previous frame refers to a frame preceding a currently processed frame in a frame sequence for computer graphics rendering. In this way, the position where the historical sampling information has been cached is selected as the target position, so that valid data (the illumination information) in cache can be directly reused without performing the full geometry rendering and illumination calculation pipeline, thereby significantly reducing resource consumption of a central processing unit caused by repeated rendering.

In this way, when an occluder exists in the collection direction, the illumination information that the reflection probe misses is supplemented by adjusting the position of the reflection probe, thereby improving the comprehensiveness of the illumination information collected by the reflection probe, and avoiding the problem of a poor rendering effect of a reflected image caused by missing illumination information, i.e., improving the rendering effect of the reflected image. Meanwhile, compared with a solution in which the illumination information that the reflection probe misses is supplemented based on an illumination information library, the above-mentioned solution improves the accuracy of the supplemented illumination information, and further improves the rendering effect of the reflected image.

In some other embodiments, the process of supplementing the illumination information collected by the parallax-corrected reflection probe may involve: marking the intersection, so as to obtain a marker indicating the intersection; and acquiring an illumination information library of the virtual scene, where the illumination information library is configured to store the illumination information of the reflected light ray in the virtual scene; and sampling, based on the marker, the illumination information at the intersection from the illumination information library.

The illumination information library is preset and includes the illumination information generated when the virtual light source illuminates all virtual objects in the virtual scene. After a hit position is marked, illumination information corresponding to the hit position is sampled from the illumination information library. In this way, the sampled illumination information is used as the illumination information for supplementation.

In this way, when an occluder exists in the collection direction, the illumination information that the reflection probe misses is supplemented by the illumination information library, thereby improving the comprehensiveness of the illumination information collected by the reflection probe, and avoiding the problem of a poor rendering effect of a reflected image caused by missing illumination information, i.e., improving the rendering effect of the reflected image. Meanwhile, in a solution in which the illumination information that the reflection probe misses is supplemented by adjusting the position of the reflection probe, since there are multiple objects in the virtual scene and there may still be occluders after the position is adjusted, it is difficult to find a suitable target position. In contrast, the solution in which the illumination information that the reflection probe misses is supplemented by the illumination information library simplifies the process of supplementing the illumination information that the reflection probe misses, and also reduces resource consumption.

Operation 303: Acquire the illumination information of the reflected light ray obtained by supplementation.

In actual implementation, if the illumination information of the virtual scene collected by the reflection probe is supplemented before the illumination information of the reflected light ray collected by the parallax-corrected reflection probe is acquired, the process of acquiring the illumination information of the reflected light ray collected by the parallax-corrected reflection probe is equivalent to acquiring the illumination information of the reflected light ray obtained by supplementation. In this way, it is ensured that the acquired illumination information is accurate illumination information.

In this way, after the parallax correction is completed for the reflection probe, a collection direction of the reflection probe for an intersection between the reflected light ray of the first virtual object and the second virtual object is further acquired, so that the collection precisely matches a real reflection path, thereby avoiding misalignment of the illumination information. If an occluder exists in the direction, a data gap may be filled by supplementing the illumination information, thereby preventing the problems such as artifacts and color deviations in the reflected image. Finally, collection is completed with the supplemented illumination information, thereby significantly improving the fidelity of the reflected image. In addition, since a full scene does not need to be re-sampled, a balance between the rendering effect and resource consumption is achieved.

Operation 103: Acquire a texture image of the first virtual object, and determine, based on the texture image and the illumination information, color values of image pixels.

In actual implementation, the process of acquiring a texture image of the first virtual object is similar to the foregoing process of performing geometry rendering on the virtual object in the target range, so as to obtain texture information, and determining, based on the texture information, the texture image of the virtual object within the target range in the virtual scene, e.g., acquiring attribute information (including position, size, shape, and the like) of the first virtual object in model space corresponding to the virtual scene; determining, based on the attribute information of the first virtual object, at least two vertices of the first virtual object in the model space, constructing a spatial coordinate system corresponding to the model space, and determining coordinates and attributes (including normals, texture coordinates, tangents, and the like) of each vertex in the spatial coordinate system; performing coordinate transformation on the coordinates of each vertex in the spatial coordinate system, so as to obtain coordinates of each vertex in a screen coordinate system; and using the coordinates of each vertex in the screen coordinate system and the attributes of each vertex as the texture information of the first virtual object; and

then, performing rasterization based on the texture information of the virtual object, so as to obtain a texture image of the first virtual object in the virtual scene, i.e., an unshaded two-dimensional image of the first virtual object in the screen space. The rasterization herein is configured for converting geometric data of the first virtual object into pixel data, i.e., converting a vector image (such as a straight line or a curve) into a grid image formed by pixels.

Next, the process of determining, based on the texture image and the illumination information, a color value of an image pixel involves, for example, for each image pixel in the texture image, performing, based on the texture information of the first virtual object, illumination calculation (i.e., illumination rendering, and shading), so as to obtain a basic color value of each image pixel; determining, based on a reflection position of the first virtual object, target image pixels in the texture image that are configured to present a color at the intersection corresponding to the reflected light ray, and determining, based on the illumination information, a reflected color value of the target pixel; for each target image pixel, combining the basic color value and the reflected color value, so as to obtain a color value of the target image pixel; and obtaining, based on the color value of the target image pixel and basic color values of other image pixels apart from the target image pixel among at least two image pixels in the texture image, the color value of each image pixel in the texture image.

The reflection position is a position where the view ray emitted by the virtual camera hits the first virtual object, i.e., a position where the first virtual object reflects the view ray emitted by the virtual camera. Meanwhile, the view ray illuminates a corresponding intersection after being reflected by the first virtual object. Therefore, in the texture image of the first virtual object, the target image pixel configured for presenting the color at the intersection corresponding to the reflected light ray is an image pixel corresponding to the reflection position in the texture image.

Moreover, since the illumination information is the color information at the intersection corresponding to the reflected light ray, the reflected color value of the target pixel may be determined based on the illumination information. The basic color value of each image pixel indicates a color of the first virtual object itself when a reflection effect is not considered. The reflected color value indicates a color at the intersection corresponding to the reflected light ray. The intersection corresponding to the reflected light ray and the reflection position on the first virtual object corresponds to, that is, the image pixel configured for presenting the color at the intersection corresponding to the reflected light ray in the texture image is the same as the image pixel configured for presenting the reflection position in the texture image. Therefore, the corresponding image pixel not only includes the color of the first virtual object, but also includes the color at the intersection corresponding to the reflected light ray. Therefore, color combination needs to be performed on the corresponding image pixel, so as to obtain the color value of each image pixel at the reflection position in the texture image.

In actual implementation, there are multiple ways to combine the basic color value and the reflected color value, so as to obtain the color value of the pixel of the target image. Next, the process of combining the basic color value and the reflected color value, so as to obtain a color value of the target image pixel will be described by using two of the multiple ways as an example.

In some embodiments, the process of combining the basic color value and the reflected color value, so as to obtain a color value of the target image pixel may involve: adding the basic color value and the reflected color value, so as to obtain the color value of each target pixel.

In some other embodiments, the process of combining the basic color value and the reflected color value, so as to obtain a color value of the target image pixel may involve: acquiring reflectivity of a reflection position; acquiring, based on the reflectivity, a first weight corresponding to the reflected color value and a second weight corresponding to the basic color value; and performing, based on the first weight, the second weight, the reflected color value, and the basic color value, weighted summation, so as to obtain the color value of each target pixel.

Operation 104: Render, based on the color values of the image pixels, so as to obtain a reflected image of the first virtual object.

In actual implementation, after the color value of each image pixel in the texture image is determined, shading is performed based on the color values of the image pixels in frame buffer space, so as to obtain the reflected image of the first virtual object.

The frame buffer space is a frame buffer, which is a memory buffer configured to store a rendering result, and is configured for a graphics processing unit to draw, based on the rendering result, an image above the rendering result, and then present a drawing result on a screen.

By applying the above-mentioned embodiments of the invention, based on the position of the first virtual object in the virtual scene and the viewing angle of the virtual camera, the parallax correction is performed on the reflection probe disposed in the virtual scene; the illumination information of the reflected light ray of the first virtual object is then collected by the parallax-corrected reflection probe; the color values of image pixels are then determined based on the acquired texture image of the first virtual object and the collected illumination information; and rendering is performed based on the color values of the image pixels, so as to obtain the reflected image of the first virtual object. In this way, compared with a reflection probe-based reflection scheme, the embodiments of the invention involve correcting a collection position of the illumination information by performing parallax correction on the reflection probe, thereby improving the accuracy of the collected illumination information, and further improving the rendering effect of the reflected image. Compared with an emitted ray-based reflection scheme, the invention improves the accuracy of the collected illumination information, thereby improving the rendering effect of the reflected image.

An exemplary application of the embodiments of the invention to an actual application scene will be described below.

Reflection schemes in computer graphics generally have two problems: insufficient precision and high performance overhead. Common solutions include a reflection probe-based reflection scheme and an emitted ray-based reflection scheme. In the reflection probe-based reflection scheme, reflection probes usually are required to be manually placed. The reflection probes are each equivalent to a camera that faces six faces, and record color information of the six faces into a cubemap. When a color of a smooth surface is calculated, a color in a same direction is directly sampled from a nearby reflection probe in a reflection direction of the smooth surface. As shown in FIG. 15, FIG. 15 is a schematic diagram of a reflection probe-based reflection scheme according to an embodiment of the invention. Based on FIG. 15, the reflection probe usually collects the illumination information only in the reflection direction. For example, the reflection probe collects the illumination information in a sampling direction indicated by 1501. In this way, since a sampling direction of the reflection probe is the same as a reflection direction of a reflection point, it can be clearly seen that a specular reflection hit point (a hit position or an intersection) is inconsistent with a world space position corresponding to a color (the illumination information) sampled from the reflection probe. As a result, the farther a surface reflection point (a reflection position) is from the reflection probe, the worse the final effect becomes. As shown in FIG. 16, FIG. 16 is an effect diagram of a reflection probe-based reflection scheme according to an embodiment of the invention. Based on FIG. 16, FIG. 16(a) indicates an accurate reflected image, and FIG. 16(b) indicates a reflected image obtained by rendering based on the reflection probe-based reflection scheme in the related art. For FIG. 16(b), since the specular reflection hit point is inconsistent with the world space position corresponding to the color sampled from the reflection probe, an accurate reflected image cannot be rendered in a mirror indicated by dashed box 1602, and an upper part of the mirror can only display an incorrect image, as indicated by dashed box 1601.

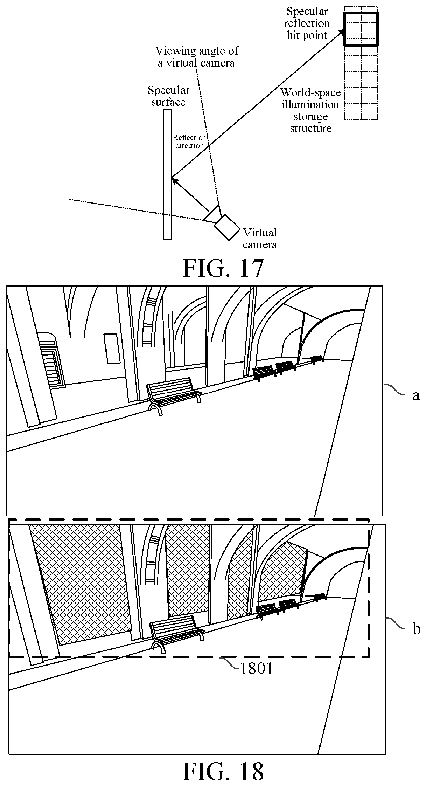

However, in the emitted ray-based reflection scheme, emitting rays may allow for acquiring an accurate world space position. In this case, the illumination information can be obtained by sampling a corresponding world-space illumination storage structure (an optical information library) according to the world space position. As shown in FIG. 17, FIG. 17 is a schematic diagram of an emitted ray-based reflection scheme according to an embodiment of the invention. Based on FIG. 17, after an accurate reflected light ray hit point (a reflection position) in world space is acquired by emitting rays, the illumination information corresponding to the reflected light ray hit point is sampled from the world-space illumination storage structure. However, this completely depends on the precision of the world-space illumination storage structure. However, higher precision represents greater performance overhead, and therefore, the precision of the world-space illumination storage structure itself is unlikely to be very high. As a result, there is the problem that although the collection position is correct, the effect is still very poor. As shown in FIG. 18, FIG. 18 is an effect diagram of an emitted ray-based reflection scheme according to an embodiment of the invention. Based on FIG. 18, FIG. 18(a) indicates an accurate reflected image, and FIG. 18(b) indicates a reflected image obtained by rendering based on the emitted ray-based reflection scheme in the related art. For FIG. 18(b), since the precision of the world-space illumination storage structure is relatively low, in a mirror indicated by dashed box 1801, a patch of mosaic is displayed in the reflected image obtained by sampling the illumination information in the world-space illumination storage structure and then performing rendering.

Therefore, the drawback of the reflection probe-based reflection scheme is that a relatively good effect can be brought only when the reflection probe is very close to a mirror surface, but in other cases, the effect is very poor. In this way, artists are required to manually adjust positions where reflection probes are placed, yet the effect poor and the labor cost is high. The drawback of the emitted ray-based reflection scheme is that a high-precision world-space illumination storage structure is required to bring a relatively good reflection effect, but the high-precision world-space storage structure also brings a large performance burden.

Based on this, an embodiment of the invention provides an image rendering method, which draws on the advantages of both the reflection probe-based reflection scheme and the emitted ray-based reflection scheme, and in which an accurate position of the world space is acquired by emitting rays, so that parallax correction is performed on the sampling direction of the reflection probe at the accurate position. Meanwhile, the position of the reflection probe is adaptively updated to reduce labor costs and the video memory usage of the reflection probe. Ultimately, a much better effect than that of the reflection probe-based reflection scheme is brought with much lower overheads than those of the emitted ray-based reflection scheme.

In actual applications, the technical solution of the embodiments of the invention may be enabled via a start command. For example, command r.GI. DynamicUpdateReflectionProbe 0 is configured for disabling the technical solution of the embodiments of the invention, and command r.GI. DynamicUpdateReflectionProbe 1 is configured for enabling the technical solution of the embodiments of the invention.

In actual implementation, for the drawbacks of poor effect and high performance overheads of relatively common reflection schemes in the related art, in the embodiments of the invention, rays are emitted by performing light ray query from a surface reflection point (a reflection position) seen in screen space (the range of observation of a virtual camera) toward a reflection direction, and a reflection hit point (a hit position and an intersection) in world space is acquired. A line connecting the hit point and the reflection probe is used as the sampling direction of the reflection probe. In this way, a very high-quality reflection effect can be brought only by the overheads of emitting rays. Meanwhile, in the embodiments of the invention, a globally unique reflection probe is automatically maintained. The position of the reflection probe changes with the movement of a character (the virtual camera). When the position of an object (the virtual object within the target range) or illumination (the light ray at the virtual object within the target range) in a scene changes, information stored in the reflection probe is also updated in a timely manner. In this way, artists are not required to manually place hundreds of reflection probes, and the illumination information needs to be manually baked into cubemaps when the object or the illumination is updated. Meanwhile, the video memory usage is reduced from the originally hundreds of probes to one.

The technical solution of the embodiments of the invention includes the following five parts:
1. Adaptive placement of reflection probe: a heuristic method is used in the embodiments of the invention to automatically update a position of a globally unique reflection probe. When the technical solution of the embodiments of the invention is implemented, a global reflection probe is automatically generated at a position of a character camera (a virtual camera), and world space is divided into tiles. When a character stays in the same tile for a long time, the position of the probe is updated. Similarly, when the character moves to another tile or a movement distance reaches a certain threshold, the position of the probe is updated. In this way, it can be ensured that the reflection probe always remains near the character camera, so as to make maximum use of information of the reflection probe.
2. Adaptive update of reflection probe: the way the reflection probe records information is essentially rendering pictures of six faces and then storing the information of the six faces into a cubemap. Deferred rendering is used in the rendering mode herein, where the deferred rendering is a modern graphics rendering technology in which geometrical processing and illumination calculation are separated, to improve the efficiency of illumination calculation in a complex scene. First, in a geometrical stage, geometrical information (such as position, normal, and material property) of all visible objects is rendered and stored into a set of textures referred to as G-Buffer. In an illumination phase, illumination calculation is then performed by using the pre-stored geometrical information, without traversing and processing all geometric bodies in a scene again. In this way, a large quantity of light sources can be efficiently processed, as the illumination calculation is performed only in screen space, avoiding the overhead of per-light per-object calculation in traditional forward rendering. For example, G-Buffers of 6 faces are required to be first rendered, and then shading is performed by the G-Buffers. The G-Buffers record geometric information (texture information) of an object. In the embodiments of the invention, the movement of the object and update of illumination are distinguished. When the object moves (a relative position between a virtual camera and a virtual object change), the geometrical information of the six faces observed by the reflection probe changes. Therefore, in this case, a full deferred rendering pipeline needs to be performed. When illumination is updated (the light ray at a virtual object changes), since relative positions of objects in the world space do not change, information recorded by the G-Buffer also does not need to be updated. Therefore, the original G-Buffer is reserved, and only a finally rendered image is updated.
3. Frame-sequential update of reflection probe: for the update of the reflection probe, information on six faces usually needs to be updated, but if direct rendering is performed within one frame for six times for updating, the time taken within this frame is excessively long. When it takes a very long time within the frame for updating the reflection probe, and it takes a very short time within each frame when the reflection probe is not updated, stuttering may happen. Therefore, in the embodiments of the invention, the six faces are updated in six separate passes, and only one face is updated each time, and is updated every 10 frames. In this way, the update is completed within 60 frames, and updated content is replaced into an original cubemap, which is equivalent to distributing the updates of the screen probe across multiple frames, so that the probe can be updated in real time without reducing smoothness.
4. Calculation of reflected color: In the technical solution of the embodiments of the invention, a reflection hit point (a hit position and an intersection) in the world space is quickly acquired by performing light ray query from a surface reflection point (a reflection position) toward a reflection direction, a line connecting the reflection hit point in the world space to a world position of the reflection probe is established to form a direction vector, i.e., a sampling direction of the reflection probe, and a color is directly sampled from a cubemap of the probe.
5. Supplementation of missing illumination information: In most cases, the reflection probe can obtain a correct reflected color by parallax correction, but in a few cases, an object blocks the reflection probe in a direction, and in this case, the reflection probe cannot see information behind the occluder. If a specular reflection hit point (hit position) happens to be in this case, the reflection probe misses this part of information, as shown in FIG. 13. In this case, if the reflection probe is directly sampled by the original method, the illumination information for the reflection hit point behind the occluder actually is that on the surface of the occluder, leading to the problem similar to smearing. For this problem, in the embodiments of the invention, depths of the six faces that are seen are stored in the reflection probe. In this way, when the color of the reflection probe is used, a judgment is performed first through the depth, if a distance from the specular reflection hit point to the reflection probe is greater than the depth of the reflection probe in the corresponding direction, the specular reflection hit point is actually behind the occluder, and thus the reflection probe cannot be directly sampled. Such specular reflection hit points are then marked, and then a fallback solution is performed on the specular reflection hit points, that is, a world-space illumination storage structure (an illumination information library) that has not so high sampling precision is sampled.

By applying the above-mentioned embodiments of the invention, based on the position of the first virtual object in the virtual scene and the viewing angle of the virtual camera, the parallax correction is performed on the reflection probe disposed in the virtual scene; the illumination information of the reflected light ray of the first virtual object is then collected by the parallax-corrected reflection probe; the color values of image pixels are then determined based on the acquired texture image of the first virtual object and the collected illumination information; and rendering is performed based on the color values of the image pixels, so as to obtain the reflected image of the first virtual object. In this way, compared with a reflection probe-based reflection scheme, the embodiments of the invention involve correcting a collection position of the illumination information by performing parallax correction on the reflection probe, thereby improving the accuracy of the collected illumination information, and further improving the rendering effect of the reflected image. Compared with an emitted ray-based reflection scheme, the invention improves the accuracy of the collected illumination information, thereby improving the rendering effect of the reflected image.

An exemplary structure of the image rendering apparatus 455 implemented as a software module according to an embodiment of the invention will be further described below. In some embodiments, as shown in FIG. 2, the software module in the image rendering apparatus 455 stored in the memory 450 may include: a correction module 4551, configured to perform, based on a position of a first virtual object in a virtual scene and a viewing angle of a virtual camera, parallax correction on a reflection probe disposed in the virtual scene; a collection module 4552, configured to collect, by the parallax-corrected reflection probe, illumination information of a reflected light ray of the first virtual object; a determination module 4553, configured to acquire a texture image of the first virtual object, and determine, based on the texture image and the illumination information, color values of image pixels; and a rendering module 4554, configured to render, based on the color values of the image pixels, so as to obtain a reflected image of the first virtual object.

In some embodiments, the correction module 4551 is further configured to determine, based on the position of the first virtual object and the viewing angle of the virtual camera, an intersection between the reflected light ray of the first virtual object and a second virtual object in the virtual scene; and determine a first direction that points from a position of the reflection probe to the intersection, and adjust a direction to collect the illumination information of the reflected light ray of the first virtual object by the reflection probe to be the first direction.

In some embodiments, the correction module 4551 is further configured to construct a spatial coordinate system of the virtual scene, and determine first coordinates of the reflection probe in the spatial coordinate system; acquire second coordinates of the intersection in the spatial coordinate system; and subtract the first coordinates from the second coordinates, so as to obtain a vector that points from the reflection probe to the intersection, and determine a direction indicated by the vector as the first direction.

In some embodiments, the apparatus further includes an acquisition module. The acquisition module is configured to acquire a position of the virtual camera in the virtual scene; and generate, based on the position of the virtual camera, the reflection probe.

In some embodiments, the apparatus further includes a first update module. The first update module is configured to detect the position of the virtual camera; and update, in response to the position of the virtual camera changing from a first position to a second position and based on the second position of the virtual camera, the position of the reflection probe.

In some embodiments, the first update module is further configured to determine, in response to the position of the virtual camera changing from the first position to the second position, a difference between the first position and the second position; and update, in response to the difference reaching a difference threshold, the position of the reflection probe.

In some embodiments, the virtual scene is divided into at least two grid cells, and the first update module is further configured to detect the position of the virtual camera; and update, in response to the position of the virtual camera changing from being in a first grid cell to being in a second grid cell and based on the second grid cell, the position of the reflection probe.

In some embodiments, the virtual scene is divided into at least two grid cells, and the acquisition module is further configured to acquire a grid cell where the virtual camera in the virtual scene is located; and the first update module is further configured to acquire a duration that the virtual camera is located in the grid cell; and update the position of the reflection probe when the duration reaches a target duration.

In some embodiments, the parallax-corrected reflection probe records illumination information of a virtual object within a target range in the virtual scene; and the apparatus further includes a second update module. The second update module is configured to update, when an update condition of the reflection probe is met, the illumination information collected by the reflection probe, so as to obtain updated illumination information. The update condition includes at least one of the following: a relative positional relationship between the parallax-corrected reflection probe and the virtual object within the target range in the virtual scene changes; and a light ray at the virtual object within the target range in the virtual scene changes. The collection module 4552 is further configured to acquire, from the updated illumination information, the illumination information of the reflected light ray of the first virtual object.

In some embodiments, the illumination information includes color information obtained by shading, based on texture information of the virtual object within the target range, the virtual object within the target range. The second update module is further configured to update, when the update condition is that the relative positional relationship changes, the texture information corresponding to the illumination information, so as to obtain new texture information; and update, based on the new texture information, the color information, so as to obtain new color information, and use the new color information as the updated illumination information.

In some embodiments, the illumination information includes color information obtained by shading, based on texture information of the virtual object within the target range, the virtual object within the target range. The second update module is further configured to acquire, when the update condition is that the light ray changes, the texture information corresponding to the illumination information; and update, based on the texture information, the color information, so as to obtain new color information, and use the new color information as the updated illumination information.

In some embodiments, the second update module is further configured to acquire, based on the texture information, a texture image of the virtual object within the target range in the virtual scene, and determine, based on the texture image and the light ray at the virtual object, a color value of each pixel in the texture image; and use the color value of each pixel as the new color information.

In some embodiments, the reflection probe has a polyhedron shape, local illumination information in the virtual scene is recorded on different faces of the polyhedron, the local illumination information recorded on the different faces is different, and the illumination information includes the local illumination information recorded on each of the faces. The second update module is further configured to determine an update period of the reflection probe, where the update period indicates a minimum update interval between any two faces of the polyhedron; and sequentially update, based on the update period, the local illumination information recorded on each of the faces of the polyhedron, so as to obtain the updated illumination information.

In some embodiments, the apparatus further includes a supplementation module. The supplementation module is configured to acquire a collection direction in which the parallax-corrected reflection probe collects the illumination information for the intersection corresponding to the reflected light ray, where the intersection corresponding to the reflection probe is a position where the reflected light ray of the first virtual object intersects with the second virtual object in the virtual scene; and supplement, if an occluder exists in the collection direction, the illumination information collected by the parallax-corrected reflection probe. The collection module 4552 is further configured to acquire the illumination information of the reflected light ray obtained by supplementation.

In some embodiments, the apparatus further includes a second determination module. The second determination module is configured to construct the spatial coordinate system of the virtual scene, and determine a depth of the reflection probe in the collection direction in the spatial coordinate system; acquire third coordinates of the reflection probe in the spatial coordinate system, and acquire fourth coordinates of the intersection in the spatial coordinate system; determine, based on the third coordinates and the fourth coordinates, a distance between the reflection probe and the intersection; and determine, when the distance is greater than the depth of the reflection probe in the collection direction, that an occluder exists in the collection direction of the reflection probe.

In some embodiments, the supplementation module is further configured to adjust the position of the reflection probe to a target position; where no occluder exists in a collection direction of the reflection probe at the target position toward the intersection, and the target position indicates a position where the reflection probe is capable of collecting the illumination information at the intersection; and acquire the illumination information of the reflected light ray of the first virtual object collected by the reflection probe at the target position.

In some embodiments, the supplementation module is further configured to mark the intersection, so as to obtain a marker indicating the intersection; acquire an illumination information library of the virtual scene, where the illumination information library is configured to store the illumination information in the virtual scene; and sample, based on the marker, the illumination information at the intersection from the illumination information library.

An embodiment of the invention provides a computer program product, including a computer-executable instruction or a computer program, where the computer-executable instruction or the computer program is stored in a computer-readable storage medium. The processor of the electronic device reads the computer-executable instruction or the computer program from the computer-readable storage medium, and the processor executes the computer-executable instruction or the computer program, such that the electronic device executes the image rendering method described in the foregoing embodiments of the invention.

An embodiment of the invention provides a computer-readable storage medium having a computer-executable instruction or a computer program stored thereon that, when executed by a processor, causes the processor to execute the image rendering method provided in the embodiments of the invention, for example, the image rendering method as shown in FIG. 3.

In some embodiments, the computer-readable storage medium may be a memory such as a read-only memory (ROM), a random access memory (RAM), an erasable programmable read-only memory (EPROM), an electrically erasable programmable read-only memory (EEPROM), a flash memory, a magnetic surface memory, an optical disc, or a CD-ROM, or may be various devices including one of or any combination of the above-mentioned memories.

In some embodiments, the computer-executable instruction may take the form of programs, software, software modules, scripts, or code, written in any form of programming language (including compiled or interpreted languages, or declarative or procedural languages), and may be deployed in any form, including being deployed as a standalone program or being deployed as a module, a component, a subroutine, or other units suitable for use in a computing environment.

As an example, the computer-executable instruction may but not necessarily correspond to a file in a file system, and may be stored in a part of a file that stores other programs or data, for example, stored in one or more scripts in a Hypertext Markup Language (HTML) document, stored in a single file dedicated to a program in question, or stored in multiple coordinated files (for example, files that store one or more modules, subprograms, or code parts).

As an example, the computer-executable instruction may be deployed to be executed on one electronic device, or to be executed on multiple electronic devices located at one site, or to be executed on multiple electronic devices distributed at multiple sites and interconnected via a communications network.

In summary, the embodiments of the invention have the following beneficial effects:
(1) Compared with a reflection probe-based reflection scheme, the invention involves correcting a collection position of the illumination information by performing parallax correction on the reflection probe, thereby improving the accuracy of the collected illumination information, and further improving the rendering effect of the reflected image. Compared with an emitted ray-based reflection scheme, the invention improves the accuracy of the collected illumination information, thereby improving the rendering effect of the reflected image.
(2) When the position of the virtual camera changes, the position of the reflection probe is synchronously updated, thereby ensuring that all illumination information within the viewing angle of the virtual camera can be collected by the reflection probe, i.e., avoiding the reflection probe omitting illumination information to be collected, and thus improving the rendering effect of the reflected image obtained by rendering based on the illumination information.
(3) When at least one of the relative positional relationship between the reflection probe and the virtual object within the target range in the virtual scene and the light ray at the virtual object within the target range in the virtual scene changes, the illumination information collected by the reflection probe is updated, thereby ensuring the accuracy of the illumination information collected by the reflection probe, i.e., improving the effect of the reflected image obtained by rendering based on the reflection probe.
(4) The updates of the reflection probe are distributed across multiple frames, thereby avoiding stuttering caused by updating the reflection probe, so that the update of the reflection probe can be implemented without reducing smoothness.
(5) When an occluder exists in the collection direction, the collected illumination information is supplemented, so that the reflection probe can collect the illumination information occluded by the occluder, thereby improving the comprehensiveness of the illumination information collected by the reflection probe, and avoiding the problem of a poor rendering effect of a reflected image caused by missing illumination information, i.e., improving the rendering effect of the reflected image.

In the embodiments of the invention, related data such as preset attribute information of the reflection probe is involved. When the embodiment of the invention is applied to specific products or technologies, the user's permission or consent is required, and the collection, use and processing of the related data require to comply with the relevant laws, regulations and standards of relevant countries and regions.

The foregoing is merely an embodiment of the present application, and is not intended to limit the scope of protection of the present application. Any modifications, equivalent replacements, improvement and the like made within the spirit and scope of the invention shall fall within the protection scope of the invention.

## Claims

1. An image rendering method, executed by an electronic device, the method comprising:
performing, based on a position of a first virtual object in a virtual scene and a viewing angle of a virtual camera, parallax correction on a reflection probe disposed in the virtual scene;
collecting, by the parallax-corrected reflection probe, illumination information of a reflected light ray of the first virtual object;
acquiring a texture image of the first virtual object, and determining, based on the texture image and the illumination information, color values of image pixels; and
rendering, based on the color values of the image pixels, a reflected image of the first virtual object.

2. The method according to claim 1, wherein performing, based on the position of the first virtual object in the virtual scene and the viewing angle of the virtual camera, the parallax correction on the reflection probe disposed in the virtual scene comprises:
determining, based on the position of the first virtual object and the viewing angle of the virtual camera, an intersection between the reflected light ray of the first virtual object and a second virtual object in the virtual scene; and
determining a first direction that points from a position of the reflection probe to the intersection, and adjusting a direction to collect the illumination information of the reflected light ray of the first virtual object by the reflection probe to be the first direction.

3. The method according to claim 2, wherein before performing, based on the position of the first virtual object in the virtual scene and the viewing angle of the virtual camera, the parallax correction on the reflection probe disposed in the virtual scene, the method comprises:
constructing a spatial coordinate system of the virtual scene, and determining first coordinates of the reflection probe in the spatial coordinate system;
determining the first direction that points from the position of the reflection probe to the intersection comprises:
acquiring second coordinates of the intersection in the spatial coordinate system; and
subtracting the first coordinates from the second coordinates, to obtain a vector that points from the reflection probe to the intersection, and determining a direction indicated by the vector as the first direction.

4. The method according to any one of claims 1 to 3, wherein before performing, based on the position of the first virtual object in the virtual scene and the viewing angle of the virtual camera, the parallax correction on the reflection probe disposed in the virtual scene, the method further comprises:
acquiring a position of the virtual camera in the virtual scene; and
generating, based on the position of the virtual camera, the reflection probe.

5. The method according to claim 4, wherein after generating, based on the position of the virtual camera, the reflection probe, the method further comprises:
detecting the position of the virtual camera; and
updating, in response to the position of the virtual camera changing from a first position to a second position and based on the second position of the virtual camera, a position of the reflection probe.

6. The method according to claim 5, wherein the updating, in response to the position of the virtual camera changing from the first position to the second position and based on the second position of the virtual camera, the position of the reflection probe comprises:
determining, in response to the position of the virtual camera changing from the first position to the second position, a difference between the first position and the second position; and
updating, in response to the difference reaching a difference threshold, the position of the reflection probe.

7. The method according to any one of claims 4 to 6, wherein the virtual scene is divided into at least two grid cells, and after generating, based on the position of the virtual camera, the reflection probe, the method further comprises:
detecting the position of the virtual camera; and
updating, in response to the position of the virtual camera changing from being in a first grid cell to being in a second grid cell and based on the second grid cell, a position of the reflection probe.

8. The method according to any one of claims 4 to 7, wherein the virtual scene is divided into at least two grid cells, and acquiring the position of the virtual camera in the virtual scene comprises:
acquiring a grid cell where the virtual camera is located in the virtual scene; and
after generating, based on the position of the virtual camera, the reflection probe, the method further comprises:
acquiring a duration that the virtual camera is located in the grid cell; and
updating the position of the reflection probe when the duration reaches a target duration.

9. The method according to any one of claims 4 to 8, wherein generating, based on the position of the virtual camera, the reflection probe comprises:
acquiring attribute information of the reflection probe, wherein the attribute information comprises at least one of: a type, a size, a sampling range, and an intensity of the reflection probe; and
generating, based on the attribute information, the reflection probe at a position that is associated with the virtual camera.

10. The method according to any one of claims 1 to 9, wherein the parallax-corrected reflection probe records illumination information of a virtual object within a target range in the virtual scene;
before collecting, by the parallax-corrected reflection probe, the illumination information of the reflected light ray of the first virtual object, the method further comprises:
updating, when an update condition of the reflection probe is met, the illumination information collected by the reflection probe, to obtain updated illumination information, wherein the update condition comprises at least one of:
a relative positional relationship between the parallax-corrected reflection probe and the virtual object within the target range in the virtual scene changes; and
a light ray at the virtual object within the target range in the virtual scene changes; and
collecting, by the parallax-corrected reflection probe, the illumination information of the reflected light ray of the first virtual object comprises:
acquiring, from the updated illumination information, the illumination information of the reflected light ray of the first virtual object.

11. The method according to claim 10, wherein the illumination information comprises color information obtained by shading, based on texture information of the virtual object within the target range, the virtual object within the target range; and
updating the illumination information collected by the reflection probe, to obtain the updated illumination information comprises:
updating, when the update condition is that the relative positional relationship changes, the texture information corresponding to the illumination information, to obtain new texture information; and
updating, based on the new texture information, the color information, to obtain new color information, and using the new color information as the updated illumination information.

12. The method according to claim 11, wherein updating, based on the new texture information, the color information, to obtain the new color information comprises:
determining, based on the new texture information, a texture image of the virtual object within the target range in the virtual scene, and determining, based on the texture image and the light ray at the virtual object, a respective color value of each pixel in the texture image; and
using the respective color value of each pixel as the new color information.

13. The method according to any one of claims 10 to 12, wherein the illumination information comprises color information obtained by shading, based on texture information of the virtual object within the target range, the virtual object within the target range; and
updating the illumination information collected by the reflection probe, to obtain the updated illumination information comprises:
acquiring, when the update condition is that the light ray changes, the texture information corresponding to the illumination information; and
updating, based on the texture information, the color information, to obtain new color information, and using the new color information as the updated illumination information.

14. The method according to any one of claims 10 to 12, wherein the reflection probe has a polyhedron shape, local illumination information in the virtual scene is recorded on different faces of the polyhedron, the local illumination information recorded on different faces is different, and the illumination information comprises the local illumination information recorded on each of the faces; and
updating the illumination information collected by the reflection probe, to obtain the updated illumination information comprises:
determining an update period of the reflection probe, wherein the update period indicates a minimum update interval between any two faces of the polyhedron; and
sequentially updating, based on the update period, the local illumination information recorded on each of the faces of the polyhedron, to obtain the updated illumination information.

15. The method according to any one of claims 1 to 14, wherein after performing, based on the position of the first virtual object in the virtual scene and the viewing angle of the virtual camera, the parallax correction on the reflection probe disposed in the virtual scene, the method further comprises:
acquiring a collection direction in which the parallax-corrected reflection probe collects the illumination information for an intersection corresponding to the reflected light ray, wherein the intersection corresponding to the reflection probe is a position where the reflected light ray of the first virtual object intersects with a second virtual object in the virtual scene; and
supplementing, when an occluder exists in the collection direction, the illumination information collected by the parallax-corrected reflection probe,
collecting, by the parallax-corrected reflection probe, the illumination information of the reflected light ray of the first virtual object comprises:
acquiring the illumination information of the reflected light ray obtained by supplementation.

16. The method according to claim 15, wherein before supplementing the illumination information collected by the parallax-corrected reflection probe, the method further comprises:
constructing a spatial coordinate system of the virtual scene, and determining a depth of the reflection probe in the collection direction in the spatial coordinate system;
acquiring third coordinates of the reflection probe in the spatial coordinate system, and acquiring fourth coordinates of the intersection in the spatial coordinate system;
determining, based on the third coordinates and the fourth coordinates, a distance between the reflection probe and the intersection; and
determining, when the distance is greater than the depth of the reflection probe in the collection direction, that the occluder exists in the collection direction of the reflection probe.

17. The method according to claim 15 or 16, wherein supplementing the illumination information collected by the parallax-corrected reflection probe comprises:
adjusting a position of the reflection probe to a target position, wherein no occluder exists in a collection direction of the reflection probe at the target position toward the intersection, and the target position indicates a position where the reflection probe is capable of collecting the illumination information at the intersection; and
acquire the illumination information of the reflected light ray of the first virtual object collected by the reflection probe at the target position.

18. The method according to claim 15 or 16, wherein supplementing the illumination information collected by the parallax-corrected reflection probe comprises:
marking the intersection, to obtain a marker indicating the intersection;
acquiring an illumination information library of the virtual scene, wherein the illumination information library is configured to store the illumination information in the virtual scene; and
sampling, based on the marker, the illumination information at the intersection from the illumination information library.

19. The method according to any one of claims 1 to 18, wherein before collecting, by the parallax-corrected reflection probe, the illumination information of the reflected light ray of the first virtual object, the illumination information of the virtual scene collected by the reflection probe is updated; and
collecting the illumination information of the reflected light ray of the first virtual object comprises:
acquiring, from the updated illumination information, the illumination information of the reflected light ray of the first virtual object.

20. An image rendering apparatus, comprising:
a correction module, configured to perform, based on a position of a first virtual object in a virtual scene and a viewing angle of a virtual camera, parallax correction on a reflection probe disposed in the virtual scene;
a collection module, configured to collect, by the parallax-corrected reflection probe, illumination information of a reflected light ray of the first virtual object;
a determination module, configured to acquire a texture image of the first virtual object, and determine, based on the texture image and the illumination information, color values of image pixels; and
a rendering module, configured to render, based on the color values of the image pixels, a reflected image of the first virtual object.

21. An electronic device, comprising:
a memory, configured to store a computer-executable instruction or a computer program; and
a processor, configured to implement, when executing the computer-executable instruction or the computer program stored in the memory, the image rendering method according to any one of claims 1 to 19.

22. A computer-readable storage medium having stored therein a computer-executable instruction or a computer program that, when executed by a processor, causes the processor to implement the image rendering method according to any one of claims 1 to 19.

23. A computer program product, comprising a computer-executable instruction or a computer program, the computer-executable instruction or the computer program, when executed by a processor, implementing the image rendering method according to any one of claims 1 to 19.
